# FASCICULE DE BREVET EUROPEEN

(11) **EP 4 101 738 B1**
(45) Date de publication et mention de la délivrance du brevet: **03.01.2024**
(21) Numéro de dépôt: 22176909.4
(22) Date de dépôt: 02.06.2022
(51) Int. Cl.: B62D 13/04, B62D 13/02

(54) **DISPOSITIF DIRECTIONNEL POUR VEHICULE TRACTE**
LENKVORRICHTUNG FÜR GEZOGENES FAHRZEUG
DIRECTIONAL DEVICE FOR A TOWED VEHICLE

(30) Priorité: 07.06.2021 FR 2105957
(43) Date de publication de la demande: 14.12.2022
(73) Titulaire: Etablissements Antoine Corne, 62870 Campagne-lès-Hesdin (FR)
(72) Inventeur: PHILIPPE, Alexis, 62140 REGNAUVILLE (FR)
(74) Mandataire: Plasseraud IP

(56) Documents cités:
- EP-A1- 2 497 658
- FR-A1- 2 867 439
- US-A- 5 364 116

## Description

L'invention concerne un dispositif directionnel pour véhicule tracté, et notamment pour remorques, un véhicule tracté équipé d'un tel dispositif directionnel, ainsi qu'un ensemble comprenant un véhicule tracteur et un véhicule tracté équipé d'un tel dispositif directionnel.

### Domaine technique

L'invention relève du domaine des dispositifs directionnels pour véhicules tractés, prévus pour être reliée à un véhicule tracteur, lesdits dispositifs directionnels permettant de faciliter l'orientation des roues du véhicule tracté lors d'une prise de virage du véhicule tracteur, et notamment au cours d'une manoeuvre compliquée, impliquant par exemple une marche arrière.

### Technique antérieure

De façon connue, un véhicule tracté, comme par exemple une remorque, et notamment une remorque agricole, est généralement tracté par un véhicule tracteur. A cet effet, il comporte généralement un essieu avant équipé de roues avant orientables et relié à un timon, par l'intermédiaire duquel il est couplé au véhicule tracteur. Ainsi, lorsque ledit véhicule tracteur prend un virage, le timon se déplace latéralement et entraîne également l'orientation des roues avant du véhicule tracté.

Néanmoins, les roues arrière d'un ou plusieurs essieux arrière demeurent droites et peuvent ainsi être traînées sur le sol au cours de la prise de virage du véhicule tracteur, ce qui peut les détériorer, voire bloquer le déplacement du véhicule tracté sur le sol.

Afin de résoudre ce problème, il a été proposé d'équiper le véhicule tracté d'un essieu arrière avec des roues arrière orientables, dont l'orientation est forcée en étant généralement commandée par l'intermédiaire d'éléments de commande électroniques.

Même si un véhicule tracté ainsi équipé présente une direction améliorée, en ce que ses roues arrières peuvent être forcées à pivoter de sorte à pouvoir suivre le véhicule tracteur lorsque celui-ci prend un virage, et que celles-ci ne risquent donc pas d'être traînées sur le sol, les éléments de commande électrique employés présentent une conception complexe, nécessitent une alimentation électrique dédiée, et augmentent donc sensiblement le coût de revient du véhicule tracté, également en ce qu'ils peuvent nécessiter d'importantes opérations de maintenance.

En outre, en ce qui concerne la revendication indépendante, le document US 5 364 116 divulgue un dispositif directionnel pour véhicule tracté comprenant au moins un essieu directeur, et notamment un essieu directeur arrière positionné sensiblement à l'arrière dudit véhicule tracté selon sa direction longitudinale, avec un axe recevant deux roues au niveau de ses extrémités longitudinales : une roue droite et une roue gauche, chacune orientable par rapport audit axe respectivement selon un premier axe sensiblement vertical du véhicule tracté et un deuxième axe sensiblement vertical du véhicule tracté, ainsi qu'un timon prévu pour relier ledit véhicule tracté à un véhicule tracteur de manière pivotante selon un axe d'articulation sensiblement vertical du véhicule tracté, et notamment au niveau d'un attelage du véhicule tracteur, le dispositif directionnel comportant: un distributeur hydraulique, prévu pour être solidaire du véhicule tracté, et notamment au niveau ou à proximité du timon, avec un carter, un premier orifice de sortie de fluide et un deuxième orifice de sortie de fluide, le distributeur hydraulique étant configuré pour commander la sortie de fluide au niveau du premier orifice ou au niveau du deuxième orifice, au moins un actionneur hydraulique, notamment prévu pour être solidaire de l'essieu directeur du véhicule tracté, et prévu pour être relié à au moins une roue de l'essieu directeur du véhicule tracté, de sorte à entraîner le pivotement desdites roues par rapport audit axe de l'essieu directeur respectivement autour dudit premier axe et du deuxième axe, et relié au premier et au deuxième orifice de sortie d'huile du distributeur hydraulique, de sorte que son alimentation en fluide par ledit premier orifice entraîne le pivotement de la roue droite et de la roue gauche par rapport audit axe dans un premier sens de rotation, respectivement autour dudit premier axe et du deuxième axe, et que son alimentation en fluide par ledit deuxième orifice entraîne le pivotement de la roue droite et de la roue gauche par rapport audit axe dans un deuxième sens de rotation, opposé au premier sens de rotation, respectivement autour dudit premier axe et du deuxième axe, un système de commande relié au distributeur hydraulique et prévu pour être relié également au véhicule tracteur, et notamment au niveau ou à proximité de son attelage, auquel est relié le véhicule tracté, et afin de forcer l'orientation des roues de l'essieu directeur du véhicule tracté par rapport à l'axe, respectivement autour dudit premier axe et du deuxième axe en fonction de l'orientation du véhicule tracté par rapport au véhicule tracteur autour de l'axe d'articulation.

### Problème technique

L'invention vient pallier les lacunes de l'art antérieur en proposant un dispositif directionnel pour véhicule tracté permettant de forcer l'orientation des roues d'au moins un essieu dudit véhicule tracté de sorte à permettre audit véhicule tracté de suivre un véhicule tracteur auquel il est attaché lorsque celui-ci prend un virage, notamment au cours d'une manoeuvre compliquée, impliquant par exemple une marche arrière, et sans risquer que lesdites roues dudit au moins un essieu dudit véhicule tracté ne soient traînées sur le sol, de conception et de maintenance simplifiées et présentant un coût de revient réduit.

Ainsi, l'invention concerne un dispositif directionnel pour véhicule tracté comprenant au moins un essieu directeur, et notamment un essieu directeur arrière positionné sensiblement à l'arrière dudit véhicule tracté selon sa direction longitudinale, avec un axe recevant deux roues au niveau de ses extrémités longitudinales : une roue droite et une roue gauche, chacune orientable par rapport audit axe respectivement selon un premier axe sensiblement vertical du véhicule tracté et un deuxième axe sensiblement vertical du véhicule tracté, ainsi qu'un timon prévu pour relier ledit véhicule tracté à un véhicule tracteur de manière pivotante selon un axe d'articulation sensiblement vertical du véhicule tracté, et notamment au niveau d'un attelage du véhicule tracteur, le dispositif directionnel comportant :
- un distributeur hydraulique à moteur rotatif hydraulique, notamment de type ORBITROL, prévu pour être solidaire du véhicule tracté, et notamment au niveau ou à proximité du timon, avec un carter et un pignon d'entrée rotatif par rapport audit carter, un premier orifice de sortie de fluide et un deuxième orifice de sortie de fluide, le distributeur hydraulique étant configuré pour commander la sortie de fluide au niveau du premier orifice ou au niveau du deuxième orifice en fonction de la rotation du pignon d'entrée par rapport au carter,
- au moins un actionneur hydraulique, notamment prévu pour être solidaire de l'essieu directeur du véhicule tracté, et prévu pour être relié à au moins une roue de l'essieu directeur du véhicule tracté, de sorte à entraîner le pivotement desdites roues par rapport audit axe de l'essieu directeur respectivement autour dudit premier axe et du deuxième axe, et relié au premier et au deuxième orifice de sortie d'huile du distributeur hydraulique, de sorte que son alimentation en fluide par ledit premier orifice entraîne le pivotement de la roue droite et de la roue gauche par rapport audit axe dans un premier sens de rotation, respectivement autour dudit premier axe et du deuxième axe, et que son alimentation en fluide par ledit deuxième orifice entraîne le pivotement de la roue droite et de la roue gauche par rapport audit axe dans un deuxième sens de rotation, opposé au premier sens de rotation, respectivement autour dudit premier axe et du deuxième axe,
- un système de commande relié au pignon d'entrée du distributeur hydraulique et prévu pour être relié également au véhicule tracteur, et notamment au niveau ou à proximité de son attelage, auquel est relié le véhicule tracté, et configuré de sorte à entraîner la rotation du pignon d'entrée par rapport au carter du distributeur hydraulique lors de la prise de virage du véhicule tracteur auquel est reliée le véhicule tracté, et afin de forcer l'orientation des roues de l'essieu directeur du véhicule tracté par rapport à l'axe, respectivement autour dudit premier axe et du deuxième axe en fonction de l'orientation du véhicule tracté par rapport au véhicule tracteur autour de l'axe d'articulation.

Selon des caractéristiques optionnelles de l'invention, prises seules ou en combinaison :
- le système de commande comporte : une première bielle présentant une première extrémité longitudinale et une deuxième extrémité longitudinale, ladite première extrémité longitudinale de la première bielle étant prévue pour être articulée pivotante selon un troisième axe sensiblement vertical du véhicule tracté au véhicule tracteur auquel est reliée le véhicule tracté, une deuxième bielle présentant une première extrémité longitudinale et une deuxième extrémité longitudinale, la deuxième bielle étant articulée pivotante selon un quatrième axe sensiblement vertical du véhicule tracté à la deuxième extrémité longitudinale de la première bielle, ladite deuxième extrémité longitudinale de la deuxième bielle étant prévue pour être articulée pivotante selon un cinquième axe sensiblement vertical du véhicule tracté au timon du véhicule tracté, un pignon de commande solidaire de la deuxième extrémité longitudinale de la deuxième bielle, et engrenant avec le pignon d'entrée du distributeur hydraulique, de sorte que le pivotement du timon du véhicule tracté par rapport au véhicule tracteur autour de l'axe d'articulation entraîne la rotation du pignon d'entrée par rapport au carter du distributeur hydraulique ;
- la première bielle est de longueur réglable ;
- la deuxième bielle est configurée de sorte à recevoir la deuxième extrémité longitudinale de la première bielle selon ledit quatrième axe en une pluralité de positions discrètes entre sa première et sa deuxième extrémité longitudinale ;
- une pluralité de perçages traversant sont ménagés sur ladite deuxième bielle, respectivement au niveau de chacune desdites positions discrètes entre sa première et sa deuxième extrémité longitudinale, chaque perçage étant configuré pour recevoir un axe de rotation, relié à ladite deuxième extrémité longitudinale de la première bielle, et s'étendant selon ledit quatrième axe ;
- l'actionneur hydraulique est un vérin hydraulique double effet, comprenant une première chambre hydraulique et une deuxième chambre hydraulique séparées entre elles par un piston mobile solidaire d'une tige du vérin hydraulique, et dans lequel la première chambre hydraulique est reliée hydrauliquement au premier orifice du distributeur hydraulique et/ou la deuxième chambre hydraulique est reliée hydrauliquement au deuxième orifice du distributeur hydraulique ;
- la première chambre hydraulique du vérin hydraulique est reliée à la deuxième chambre hydraulique du vérin hydraulique par au moins une conduite, au niveau de laquelle est disposée une vanne deux voies pilotable manuellement, électriquement ou hydrauliquement, et configurée pour ouvrir ou fermer ladite conduite, et de sorte que quand ladite vanne est ouverte, les roues de l'essieu directeur sont libres en rotation par rapport à l'axe de l'essieu directeur respectivement autour du premier axe et du deuxième axe ;
- la première chambre hydraulique du vérin hydraulique est reliée à la deuxième chambre hydraulique du vérin hydraulique par : une première conduite au niveau de laquelle est disposée une première vanne deux voies pilotable électriquement ou hydrauliquement, par l'intermédiaire d'un moyen d'actionnement prévu pour être disposé sur le véhicule tracteur, et notamment au niveau ou à proximité d'un poste de pilotage dudit véhicule tracteur, et/ou une deuxième conduite au niveau de laquelle est disposée une deuxième vanne deux voies pilotable manuellement, par l'intermédiaire d'un moyen d'actionnement prévu pour être disposé sur le véhicule tracté ;
- le dispositif est adapté pour véhicule tracté comprenant deux essieux directeurs :
   -- un premier essieu directeur avec un premier axe recevant deux roues au niveau de ses extrémités longitudinales : une première roue droite et une première roue gauche, chacune orientable par rapport audit premier axe respectivement selon un premier axe sensiblement vertical du véhicule tracté et un deuxième axe sensiblement vertical du véhicule tracté, et
   -- un deuxième essieu directeur, décalé du premier essieu directeur selon la direction longitudinale du véhicule tracté, avec un deuxième axe, et recevant également deux roues au niveau de ses extrémités longitudinales : une deuxième roue droite et une deuxième roue gauche, chacune orientable par rapport audit deuxième axe respectivement selon un premier axe sensiblement vertical du véhicule tracté et un deuxième axe sensiblement vertical du véhicule tracté, ledit dispositif comprenant :
   -- un premier actionneur hydraulique prévu pour être relié à au moins une roue du premier essieu directeur, de sorte à entraîner le pivotement desdites roues par rapport audit premier axe respectivement autour dudit premier axe et du deuxième axe, et relié au premier et/ou au deuxième orifice de sortie d'huile du distributeur hydraulique, de sorte que son alimentation en fluide par ledit premier orifice entraîne le pivotement de la première roue droite et de la première roue gauche par rapport audit premier axe dans un premier sens de rotation, respectivement autour dudit premier axe et du deuxième axe, et/ou que son alimentation en fluide par ledit deuxième orifice entraîne le pivotement de la première roue droite et de la première roue gauche par rapport audit premier axe dans un deuxième sens de rotation, opposé au premier sens de rotation, respectivement autour dudit premier axe et du deuxième axe,
   -- un deuxième actionneur hydraulique prévu pour être relié à au moins une roue du deuxième essieu directeur, de sorte à entraîner le pivotement desdites roues par rapport audit deuxième axe respectivement autour dudit premier axe et du deuxième axe, et relié au premier et/ou au deuxième orifice de sortie d'huile du distributeur hydraulique, de sorte que son alimentation en fluide par ledit premier orifice entraîne le pivotement de la deuxième roue droite et de la deuxième roue gauche par rapport audit deuxième axe dans le deuxième sens de rotation, respectivement autour dudit premier axe et du deuxième axe, et/ou que son alimentation en fluide par ledit deuxième orifice entraîne le pivotement de la deuxième roue droite et de la deuxième roue gauche par rapport audit deuxième axe dans le premier sens de rotation respectivement autour dudit premier axe et du deuxième axe ;
- le premier actionneur hydraulique est un premier vérin hydraulique double effet, comprenant une première chambre hydraulique et une deuxième chambre hydraulique séparées entre elles par un piston mobile solidaire d'une tige du premier vérin hydraulique, le deuxième actionneur hydraulique est un deuxième vérin hydraulique double effet, comprenant une première chambre hydraulique et une deuxième chambre hydraulique séparées entre elles par un piston mobile solidaire d'une tige du deuxième vérin hydraulique, et :
   -- selon une première alternative, la première chambre hydraulique du premier vérin hydraulique est reliée hydrauliquement au premier orifice du distributeur hydraulique, la première chambre hydraulique du deuxième vérin hydraulique est reliée au deuxième orifice du distributeur hydraulique et la deuxième chambre hydraulique du premier vérin hydraulique est reliée à la deuxième chambre hydraulique du deuxième vérin par une troisième conduite, et de sorte que les roues du premier essieu directeur soient prévues pour pivoter par rapport au premier axe autour de leur axe de rotation respectif en sens inverse des roues du deuxième essieu directeur par rapport au deuxième axe autour de leur axe de rotation respectif, ou
   -- selon une deuxième alternative, la deuxième chambre hydraulique du premier vérin hydraulique est reliée hydrauliquement au deuxième orifice du distributeur hydraulique, la deuxième chambre hydraulique du deuxième vérin hydraulique est reliée au premier orifice du distributeur hydraulique et la première chambre hydraulique du premier vérin hydraulique est reliée à la première chambre hydraulique du deuxième vérin par une quatrième conduite, et de sorte que les roues du premier essieu directeur soient prévues pour pivoter par rapport au premier axe autour de leur axe de rotation respectif en sens inverse des roues du deuxième essieu directeur par rapport au deuxième axe autour de leur axe de rotation respectif.

L'invention concerne également un véhicule tracté comprenant au moins un essieu directeur, et notamment un essieu directeur arrière positionné sensiblement à l'arrière dudit véhicule tracté selon la direction longitudinale du véhicule tracté, avec un axe et deux roues arrière : une roue droite et une roue gauche, chacune orientable par rapport audit axe respectivement selon un premier axe sensiblement vertical du véhicule tracté et un deuxième axe sensiblement vertical du véhicule tracté, ainsi qu'un timon prévu pour relier ledit véhicule tracté à un véhicule tracteur de manière pivotante selon un axe d'articulation sensiblement vertical du véhicule tracté et un dispositif directionnel selon l'un des modes de réalisation de l'invention, solidaire du véhicule tracté.

L'invention concerne enfin un ensemble comprenant un véhicule tracteur et un véhicule tracté selon l'un des modes de réalisation de l'invention, reliée au véhicule tracteur via son timon de manière pivotante selon un axe d'articulation, et notamment au niveau d'un attelage dudit véhicule tracteur.

Les caractéristiques exposées dans les paragraphes suivants peuvent, optionnellement, être mises en oeuvre.

### Brève description des dessins

D'autres caractéristiques, détails et avantages de l'invention apparaîtront à la lecture de la description détaillée ci-après, et à l'analyse des dessins annexés, sur lesquels :
Fig. 1

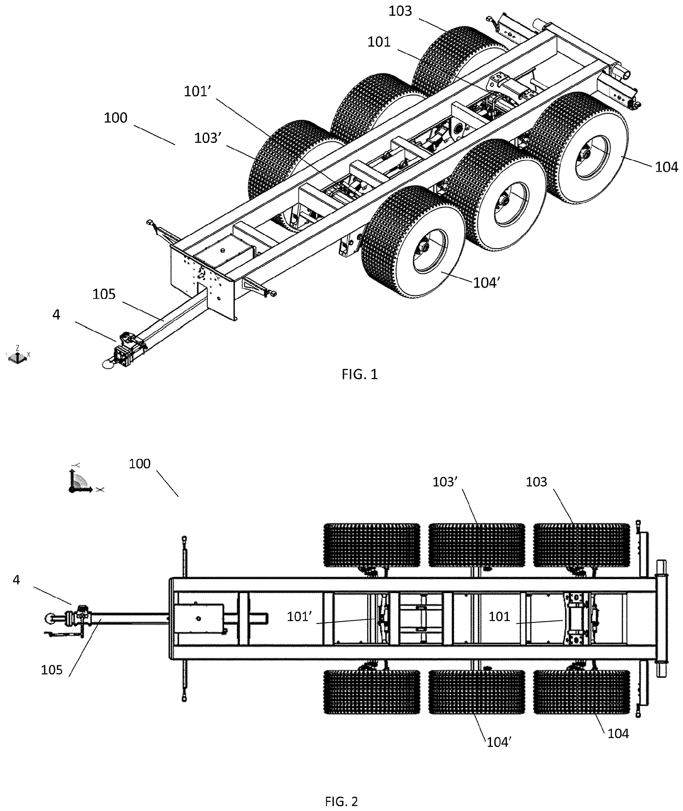

   [Fig. 1] montre une vue en perspective d'un véhicule tracté selon un mode de réalisation conforme à l'invention avec un dispositif directionnel pour véhicule tracté selon un mode de réalisation conforme à l'invention.
**Fig. 2**
   [Fig. 2] montre une vue de dessus du véhicule tracté de la figure 1.
**Fig. 3**

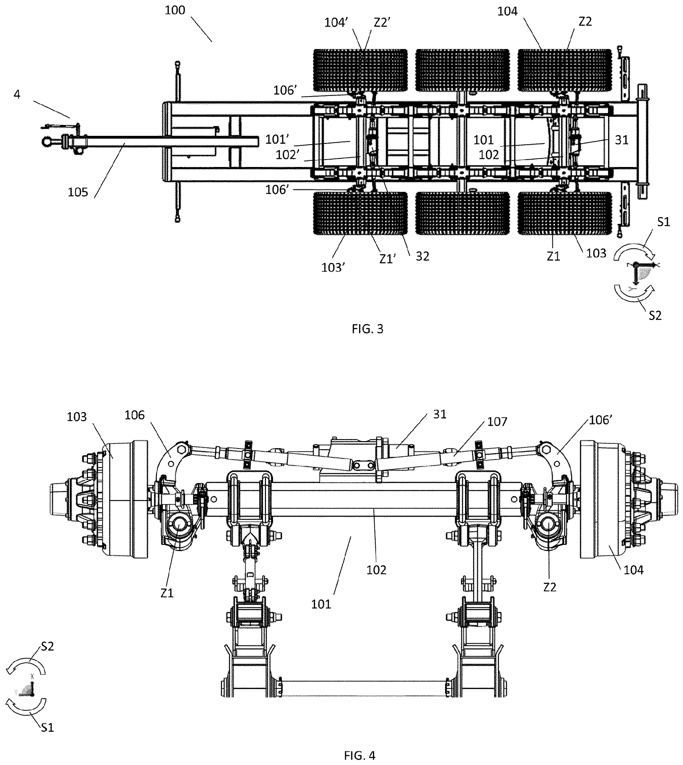

   [Fig. 3] montre une vue de dessous de la figure 1.
**Fig. 4**
   [Fig. 4] montre une vue de détail d'un essieu directeur du véhicule tracté de la figure 2, dans laquelle une partie des éléments ont été masqués.
**Fig. 5**

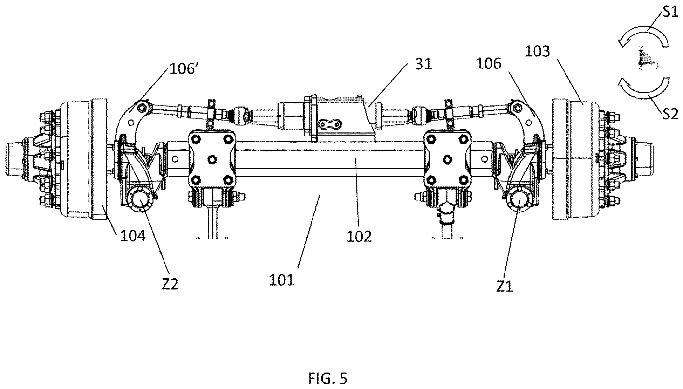

   [Fig. 5] montre une vue de détail d'un essieu directeur du véhicule tracté de la figure 3, dans laquelle une partie des éléments ont été masqués.
**Fig. 6**

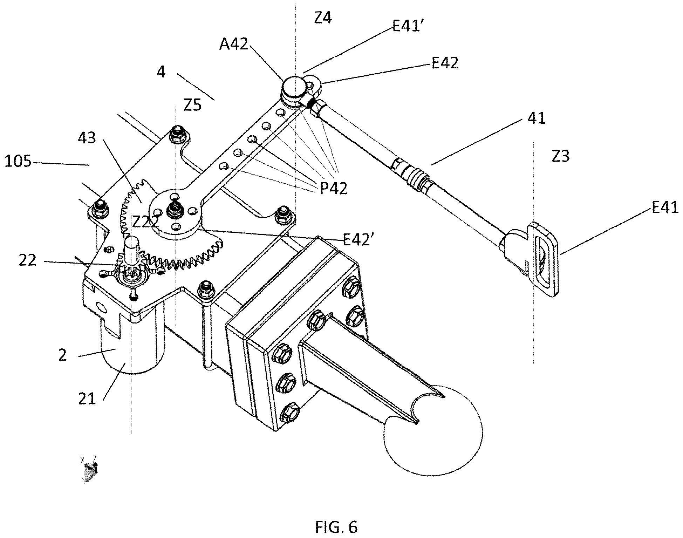

   [Fig. 6] montre une vue de détail du système de commande du véhicule tracté de la figure 1, dans laquelle une partie des éléments ont été masqués.
**Fig. 7**

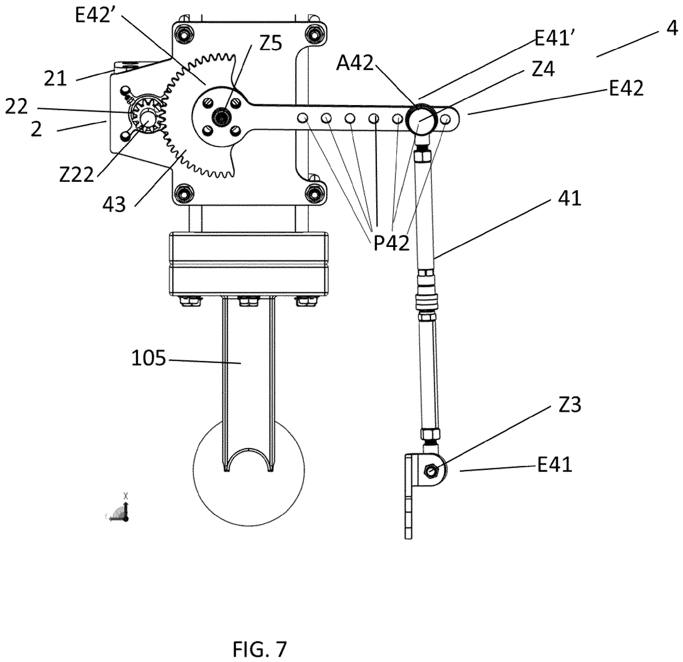

   [Fig. 7] montre une vue de détail du système de commande du véhicule tracté de la figure 2, dans laquelle une partie des éléments ont été masqués.
**Fig. 8**

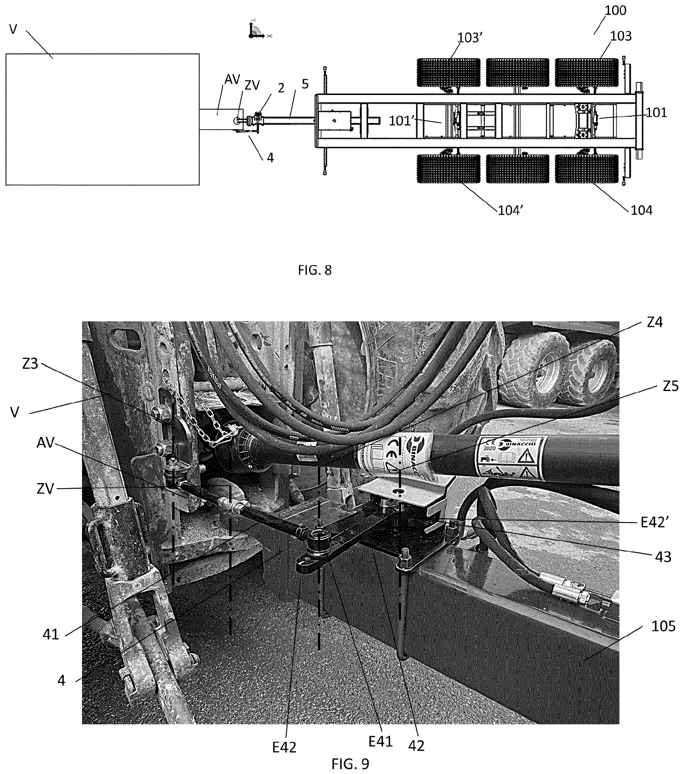

   [Fig. 8] montre une vue de dessus d'un ensemble selon un mode de réalisation conforme à l'invention.
**Fig. 9**
   [Fig. 9] montre une vue en perspective de la liaison entre l'attelage du véhicule tracteur et le véhicule tracté d'un ensemble selon un mode de réalisation conforme à l'invention.
**Fig. 10**

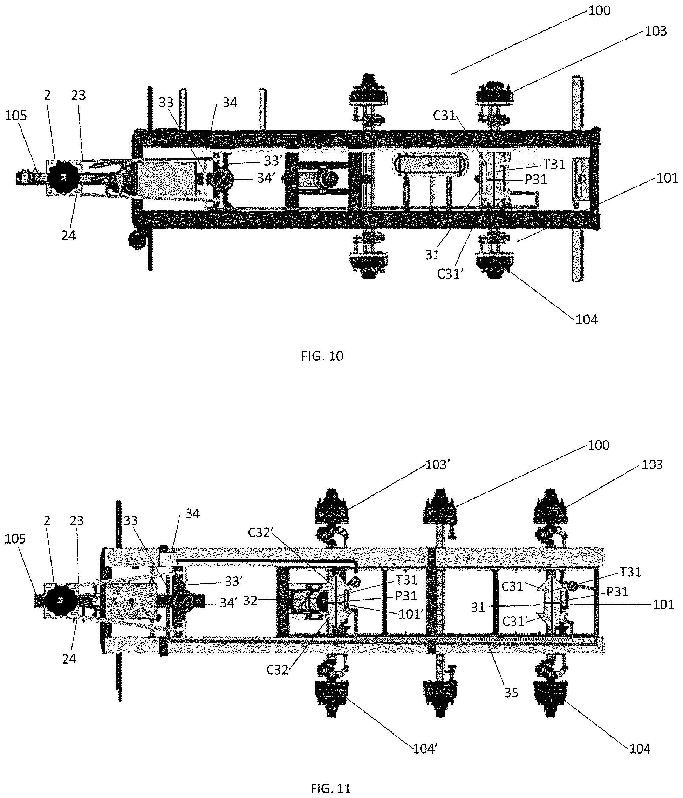

   [Fig. 10] montre une vue schématique de dessus des circuits hydrauliques d'un véhicule tracté selon un premier mode de réalisation conforme à l'invention avec un dispositif directionnel pour véhicule tracté selon un premier mode de réalisation conforme à l'invention.
**Fig. 11**
   [Fig. 11] montre une vue schématique de dessus des circuits hydrauliques d'un véhicule tracté selon un deuxième mode de réalisation conforme à l'invention avec un dispositif directionnel pour véhicule tracté selon un deuxième mode de réalisation conforme à l'invention.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Dans l'ensemble de la présente demande, les directions de l'espace sont définies comme suit :
- la direction longitudinale X du véhicule tracté correspond à sa direction de déplacement lorsque les roues de son ou de ses essieu(x) directeur(s) sont droites, comme représenté sur les figures,
- la direction transversale Y du véhicule tracté, perpendiculaire à sa direction longitudinale X, correspond sensiblement à la direction d'extension de l'axe de son ou de ses essieu(x) directeur(s), comme représenté sur les figures
- la direction verticale Z du véhicule tracté est la direction perpendiculaire à sa direction longitudinale X et à sa direction transversale Y, comme représenté sur les figures.

Un axe est défini comme une droite selon une direction déterminée. Par exemple, un axe vertical est un axe selon ladite direction verticale.

Également avant (devant) et arrière (derrière) s'entendent selon ladite direction longitudinale X du véhicule tracté, avec une orientation depuis un essieu directeur vers le timon du véhicule tracté.

De même, supérieur (dessus) et inférieur (dessous) s'entendent selon la direction verticale du véhicule tracté, avec une orientation depuis le sol sur lequel le véhicule tracté roule vers les roues (lorsque ledit véhicule tracté est posé sur un sol).

Enfin, dans l'ensemble de la présente demande, on entend par sensiblement longitudinal, transversal ou vertical, une orientation par rapport à la direction longitudinale, la direction verticale ou la direction transversale, avec un angle inférieur à 30°, qui peut avantageusement être nul.

De même, on entend par sensiblement parallèle, une orientation par rapport à un élément donné avec un angle inférieur à 30°, qui peut avantageusement être nul.

L'invention concerne, comme visible sur les figures 1 à 11, un dispositif 1 directionnel pour véhicule tracté 100, comme par exemple une remorque, comprenant au moins un essieu directeur 101, 101', et notamment un essieu directeur arrière positionné sensiblement à l'arrière dudit véhicule tracté 100 selon sa direction longitudinale X, avec un axe 102, 102' recevant deux roues au niveau de ses extrémités longitudinales : une roue droite 103, 103' et une roue gauche 104, 104', chacune orientable par rapport audit axe 102 respectivement selon un premier axe Z1, Z1' sensiblement vertical du véhicule tracté 100 et un deuxième axe Z2, Z2' sensiblement vertical du véhicule tracté 100, ainsi qu'un timon 105 prévu pour relier ledit véhicule tracté 100 à un véhicule tracteur V de manière pivotante selon un axe d'articulation ZV sensiblement vertical du véhicule tracté 100, et notamment au niveau d'un attelage AV du véhicule tracteur V, le dispositif directionnel 1 comportant :
- un distributeur hydraulique 2 à moteur rotatif hydraulique, de préférence à huile, notamment de type ORBITROL, prévu pour être solidaire du véhicule tracté 100, et notamment au niveau ou à proximité du timon 105, avec un carter 21 et un pignon d'entrée 22 rotatif par rapport audit carter 21, et notamment selon un axe de rotation Z22 sensiblement vertical du véhicule tracté 100, une premier orifice 23 de sortie de fluide et un deuxième orifice 24 de sortie de fluide, le distributeur hydraulique 2 étant configuré pour commander la sortie de fluide au niveau du premier orifice 23 ou au niveau du deuxième orifice 24 en fonction de la rotation du pignon d'entrée 22 par rapport au carter 21,
- au moins un actionneur hydraulique 31, 32, notamment prévu pour être solidaire de l'essieu directeur 101, 101' du véhicule tracté 100, et prévu pour être relié à au moins une roue 103, 103', 104, 104' de l'essieu directeur 101, 101' du véhicule tracté 100, de sorte à entraîner le pivotement desdites roues 103, 103', 104, 104' par rapport audit axe 102, 102' de l'essieu directeur 101, 101' respectivement autour dudit premier axe Z1, Z1' et du deuxième axe Z2, Z2', et relié au premier 23 et au deuxième 24 orifice de sortie de fluide du distributeur hydraulique 2, de sorte que son alimentation en fluide par ledit premier orifice 23 entraîne le pivotement de la roue droite 103, 103' et de la roue gauche 104, 104' par rapport audit axe 102, 102' dans un premier sens de rotation S1, respectivement autour dudit premier axe Z1, Z1' et du deuxième axe Z2, Z2' et que son alimentation en fluide par ledit deuxième orifice 24 entraîne le pivotement de la roue droite 103, 103' et de la roue gauche 104, 104' par rapport audit axe 102, 102' dans un deuxième sens de rotation S2, opposé au premier sens de rotation S1, respectivement autour dudit premier axe Z1, Z1' et du deuxième axe Z2, Z2',
- un système de commande 4 relié au pignon d'entrée 22 du distributeur hydraulique 2 et prévu pour être relié également au véhicule tracteur V, et notamment au niveau ou à proximité de son attelage AV, auquel est reliée le véhicule tracté 100, et configuré de sorte entraîner la rotation du pignon d'entrée 22 par rapport au carter 21 du distributeur hydraulique 2 lors de la prise de virage du véhicule tracteur V auquel est relié le véhicule tracté 100, et afin de forcer l'orientation des roues 103, 103', 104, 104' de l'essieu directeur 101, 101' du véhicule tracté 100 par rapport à l'axe 102, 102', respectivement autour dudit premier axe Z1, Z1' et du deuxième axe Z2, Z2' en fonction de l'orientation du véhicule tracté 100 par rapport au véhicule tracteur V autour de l'axe d'articulation ZV.

Ainsi, le dispositif 1 directionnel pour véhicule tracté 100 selon l'invention permet de forcer l'orientation des roues 103, 103', 104, 104' de l'essieu directeur 101, 101' du véhicule tracté 100 par rapport à la direction longitudinale X du véhicule tracté 100 lors de la prise de virage du véhicule tracteur V auquel est relié ledit véhicule tracté 100, de sorte à faciliter la prise de virage par l'ensemble véhicule tracteur V et véhicule tracté 100, notamment au cours d'une manoeuvre compliquée, impliquant par exemple une marche arrière, et de sorte que les roues 103, 103', 104, 104' de l'essieu directeur 101, 101' ne risquent pas d'être traînées au sol lors d'une telle prise de virage.

De plus, le dispositif 1 emploie uniquement des moyens hydrauliques et mécaniques pour fonctionner, et notamment le distributeur hydraulique 2, le au moins un actionneur hydraulique 31, 32 et le système de commande 4, et ne nécessite pas l'emploi d'éléments électriques pour fonctionner, et présente donc une conception et une maintenance simplifiées et un coût de revient réduit par rapport aux dispositifs directionnel pour véhicule tracté de l'art antérieur.

L'emploi d'un distributeur hydraulique 2 à moteur rotatif hydraulique, notamment de type ORBITROL s'avère particulièrement avantageux, en ce que celui-ci est commandé par un mouvement de rotation par l'intermédiaire du pignon d'entrée 22 avec une conception simplifiée et une fiabilité améliorée, notamment en comparaison avec un distributeur à mouvement de translation.

Par ailleurs, et comme visible plus particulièrement sur les figures 1 à 3 et 7 à 11, un tel distributeur hydraulique 2 à moteur rotatif hydraulique, notamment de type ORBITROL présente un encombrement réduit.

De manière conventionnelle, un distributeur hydraulique 2 à moteur rotatif hydraulique, notamment de type ORBITROL, comporte notamment ledit carter 21, généralement en fonte avec un alésage axial dans lequel communiquent :
- quatre orifices radiaux, dont au moins un est raccordé à un circuit d'admission, un autre raccordé à un circuit de retour et les deux autres, i.e. le premier 23 et le deuxième 24 orifice de sortie de fluide, reliés audit au moins un actionneur hydraulique 31, 32,
- sept orifices équidistants radiaux qui débouchent sur une face dressée du carter 21, perpendiculairement à l'alésage axial.

Le carter 21 peut avantageusement comporter un clapet de retenue destiné à assurer deux fonctions :
- lorsque une pompe hydraulique, généralement disposée au niveau du véhicule tracteur V, débite et alimente le distributeur hydraulique 2 à moteur rotatif hydraulique, ce clapet empêche toute communication entre les orifices d'admission et de retour au réservoir, et
- lorsque la pompe ne débite pas, et que le moteur hydraulique est à l'arrêt, la bille s'éloigne de son siège et met en communication les orifices d'admission et de retour au réservoir.

De manière conventionnelle également, le distributeur hydraulique 2 à moteur rotatif hydraulique peut encore comporter :
- un dispositif d'alimentation constitué par un manchon d'alimentation logé et tournant sans jeu dans l'alésage axial du carter 21 et d'un tambour de sélection logé et tournant dans le manchon d'alimentation, et à une extrémité duquel est relié le pignon d'entrée 22,
- un dispositif de refoulement du fluide vers l'actionneur hydraulique (appelé « orbit » sur un ORBITROL) et qui travaille comme un moteur hydraulique lorsque la pompe alimente le circuit avec un rotor et un stator, ou comme une pompe hydraulique lorsque la pompe n'alimente pas le circuit (moteur à l'arrêt),
- un arbre de transmission, dont une extrémité comporte un pignon à denture bombée, afin de permettre un mouvement combiné de rotation et de translation dans des cannelures d'un alésage central du rotor du dispositif de refoulement du fluide.

Au niveau du dispositif de refoulement de fluide, le rotor du moteur hydraulique tourne à l'intérieur du stator (généralement sous forme d'une pièce annulaire fixe).

Les sept orifices équidistants qui débouchent sur ladite face dressée du carter 21, communiquent dans les alvéoles du stator. En guise de dents, le rotor est avantageusement muni de lobes arrondis et le stator d'alvéoles.

Le rotor peut ainsi comporter six lobes et le stator sept alvéoles, ce qui fait qu'un seul lobe à la fois est complètement en prise avec un alvéole du stator. Le rotor est donc animé d'un mouvement de rotation et de translation, les deux mouvements étant combinés. Le rotor est avantageusement excentré par rapport au stator, ce qui permet aux lobes du rotor de glisser sur les alvéoles du stator et d'assurer l'étanchéité entre les espaces compris entre alvéoles et lobes.

Lorsque l'orbit travaille comme un moteur, l'huile refoulée par la pompe du circuit de direction, arrive sous pression dans trois espaces consécutifs et se heurte aux lobes du rotor obligeant celui-ci à tourner. Au cours de cette rotation, les volumes des trois autres espaces diminuent jusqu'à devenir nuls et l'huile s'écoule par trois des orifices du tambour d'alimentation, puis dans trois rainures longues du tambour de sélection pour atteindre l'orifice de sortie de fluide 23, 24 en communication avec ledit au moins un actionneur hydraulique 31, 32.

Le rotor, animé d'un mouvement de rotation relié par l'intermédiaire de l'arbre de transmission au pignon d'entrée 22, facilite la commande manuelle de celui-ci. Le couple appliqué au pignon d'entrée 22 lors du pivotement du véhicule tracté 100 par rapport au véhicule tracteur V autour dudit axe d'articulation ZV correspond avantageusement au couple appliqué au volant de direction du véhicule tracteur V pour braquer ses roues directrices lors de sa prise de virage, et est égal au couple nécessaire et suffisant pour décaler le tambour de sélection et le manchon d'alimentation l'un par rapport à l'autre.

Comme visible plus particulièrement sur les figures 3 à 5, les roues 103, 103', 104, 104' peuvent être reliées à l'axe 102, 102' de l'essieu directeur 101, 101' par l'intermédiaire de fusées 106, 106', par l'intermédiaire desquels la rotation des roues 103, 103', 104, 104' par rapport à l'axe 102, 102' respectivement autour du premier axe Z1, Z1' et du deuxième axe Z2, Z2' est entraînée. Avantageusement, une barre de liaison 107, 107' peut également relier les fusées 106, 106' de sorte à faciliter la rotation coordonnée des roues droite 103, 103' et gauche 104, 104' par rapport à l'axe 102, 102' de l'essieu directeur 101, 101'.

Selon un mode de réalisation, et comme visible plus particulièrement sur les figures 1 à 3 et 6 à 9, le système de commande 4 comporte :
- une première bielle 41 présentant une première extrémité longitudinale E41 et une deuxième extrémité longitudinale E41', ladite première extrémité longitudinale E41 de la première bielle 41 étant prévue pour être articulée pivotante selon un troisième axe Z3 sensiblement vertical du véhicule tracté 100 au véhicule tracteur V auquel est relié le véhicule tracté 100,
- une deuxième bielle 42 présentant une première extrémité longitudinale E42 et une deuxième extrémité longitudinale E42', la deuxième bielle 42 étant articulée pivotante selon un quatrième axe Z4 sensiblement vertical de la remorque 100 à la deuxième extrémité longitudinale E41' de la première bielle 41, ladite deuxième extrémité longitudinale E42' de la deuxième bielle 42 étant prévue pour être articulée pivotante selon un cinquième axe Z5 sensiblement vertical du véhicule tracté 100 au timon 105 du véhicule tracté 100,
- un pignon de commande 43 solidaire de la deuxième extrémité longitudinale E42' de la deuxième bielle 42, et engrenant avec le pignon d'entrée 22 du distributeur hydraulique 2.

Cela permet avantageusement, avec une conception et une maintenance simplifiée, ainsi qu'un encombrement et un coût de revient réduit du système de commande 4, lequel est constitué uniquement d'éléments mécaniques, de permettre que le pivotement du timon 105 du véhicule tracté 100 par rapport au véhicule tracteur V autour de l'axe d'articulation ZV entraîne la rotation du pignon d'entrée 22 par rapport au carter 21 du distributeur hydraulique 2.

Avantageusement, le rapport de réduction entre le pignon de commande 43 du système de commande 4 et le pignon d'entrée 22 du distributeur hydraulique 2 peut être compris entre 1 et 10, de préférence entre 3 et 6.

Selon un mode de réalisation, la première bielle 41 est de longueur réglable.

Cette disposition avantageuse permet de faciliter le montage du dispositif 1, et notamment du système de commande 4, sur le véhicule tracté 100 et sur le véhicule tracteur V.

Comme visible plus particulièrement sur les figures 6 et 7, la première bielle 41 peut à cet effet comporter deux tubes montés coulissant l'un dans l'autre.

Selon un mode de réalisation, la deuxième bielle 42 est configurée de sorte à recevoir la deuxième extrémité longitudinale E41' de la première bielle 41 selon ledit quatrième axe Z4 en une pluralité de positions discrètes entre sa première E42 et sa deuxième E42' extrémité longitudinale.

Cette disposition avantageuse permet également de faciliter le montage du dispositif 1, et notamment du système de commande 4, sur le véhicule tracté 100 et sur le véhicule tracteur V.

Par exemple, il peut être prévu entre 1 et 10 positions discrètes, de préférence entre 5 et 8, espacées entre elles d'une distance comprise entre 0,5 cm et 10 cm, de préférence entre 2 cm et 5 cm.

Selon un mode de réalisation, comme visible plus particulièrement sur les figures 6 et 7, et de sorte à simplifie la conception de ladite deuxième bielle 42, une pluralité de perçages P42 traversant sont ménagés sur ladite deuxième bielle 42, respectivement au niveau de chacune desdites positions discrètes entre sa première E42 et sa deuxième E42' extrémité longitudinale, chaque perçage P42 étant configuré pour recevoir un axe de rotation A42, relié à ladite deuxième extrémité longitudinale E41' de la première bielle 41, et s'étendant selon ledit quatrième axe Z4.

Selon un mode de réalisation, et comme visible plus particulièrement sur les figures 10 et 11, l'actionneur hydraulique 31, 32 est un vérin hydraulique double effet, comprenant une première chambre hydraulique C31, C32 et une deuxième chambre hydraulique C31', C32' séparées entre elles par un piston mobile P31, P32 solidaire d'une tige T31, T32 du vérin hydraulique 31, 32, et dans lequel la première chambre hydraulique C31 est reliée hydrauliquement, notamment par l'intermédiaire d'une conduite souple, au premier orifice 23 du distributeur hydraulique 2 et/ou la deuxième chambre hydraulique C32 est reliée hydrauliquement au deuxième orifice 24, notamment par l'intermédiaire d'une conduite souple, du distributeur hydraulique 2.

Avantageusement, ledit vérin hydraulique 31, 32 peut également comporter un moyen de rappel élastique, par exemple un ressort, configuré pour rappeler le piston mobile P31, P32 dans une position de repos.

Avantageusement, afin de faciliter le montage du dispositif 1 selon l'invention sur le véhicule tracté 100, la conduite souple reliant le premier orifice 23 à la première chambre hydraulique C31, C32 et/ou la conduite souple reliant le deuxième orifice 24 à la deuxième chambre hydraulique C31', C32' peut être munie d'un raccord rapide, par exemple de type « push-pull », au niveau d'une ou de chacune de ses extrémités.

Également, une vanne deux voies, actionnable manuellement, électriquement ou encore hydrauliquement peut être prévue entre le premier orifice 23, respectivement le deuxième orifice 24, et la première chambre hydraulique C31, C32, respectivement la deuxième chambre hydraulique C31', C32', de sorte à pouvoir bloquer l'alimentation en fluide de ladite première chambre hydraulique C31, C32, respectivement de ladite deuxième chambre hydraulique C31', C32' par le distributeur hydraulique 2, par exemple en cas de défaillance dudit distributeur hydraulique 2.

Selon un mode de réalisation, et comme visible plus particulièrement sur les figures 10 et 11, la première chambre hydraulique C31, C32 du vérin hydraulique 31, 32 est reliée à la deuxième chambre hydraulique C31, C32 du vérin hydraulique 31, 32 par au moins une conduite 33, 33', et notamment une conduite souple, au niveau de laquelle est disposée une vanne 34, 34' deux voies pilotable manuellement, électriquement ou hydrauliquement, et configurée pour ouvrir ou fermer ladite conduite 33, 33', et de sorte que quand ladite vanne 34, 34' est ouverte, les roues 103, 104, 103', 104' de l'essieu directeur 101, 101' sont libres en rotation par rapport à l'axe 102, 102' de l'essieu directeur 101, 101' respectivement autour du premier axe Z1, Z1' et du deuxième axe Z2, Z2'.

Cette disposition s'avère particulièrement avantageuse en cas de défaillance du distributeur hydraulique 2, en ce que l'ouverture de ladite vanne 34, 34' permet ainsi au véhicule tracté 100 de circuler en suivant le véhicule tracteur V auquel elle est reliée, par exemple afin de se rendre dans un lieu où la maintenance dudit distributeur hydraulique 2 peut être effectuée, avec ses roues 103, 104, 103', 104' de l'essieu directeur 101, 101' libres en rotation par rapport à l'axe 102, 102' de l'essieu directeur 101, 101' respectivement autour du premier axe Z1, Z1' et du deuxième axe Z2, Z2', ce qui évite, dans une moindre mesure que lesdites roues 103, 104, 103', 104' frottent sur le sol au cours d'une prise de virage dudit véhicule tracteur V.

Selon un mode de réalisation, et comme visible plus particulièrement sur les figures 10 et 11, la première chambre hydraulique C31, C32 du vérin hydraulique 31, 32 est reliée à la deuxième chambre hydraulique C31', C32' du vérin hydraulique 31, 32 par :
- une première conduite 33, et notamment une conduite souple, au niveau de laquelle est disposée une première vanne 34 deux voies pilotable électriquement ou hydrauliquement, par l'intermédiaire d'un moyen d'actionnement prévu pour être disposé sur le véhicule tracteur V, et notamment au niveau ou à proximité d'un poste de pilotage dudit véhicule tracteur V, ce qui s'avère avantageux en ce qu'un conducteur dudit véhicule tracteur V peut demeurer au poste de pilotage du véhicule tracteur pour piloter ladite valve, et/ou
- une deuxième conduite 33', et notamment une conduite souple, au niveau de laquelle est disposée une deuxième vanne 34' deux voies pilotable manuellement, par l'intermédiaire d'un moyen d'actionnement prévu pour être disposé sur le véhicule tracté 100, et de sorte à présenter une conception et une maintenance simplifiée et un coût de revient réduit, et à permettre la communication entre les deux chambres hydrauliques C31, C31', C32, C32' du vérin hydraulique 31, 32, en cas de défaillance de ladite première vanne 34 et/ou de ladite première conduite 33.

Comme visible sur les figures 1 à 3 et 11, le dispositif 1 peut être prévu pour un véhicule tracté 100 comprenant deux essieux directeurs 101, 101' :
- un premier essieu directeur 101 avec un premier axe 102 recevant deux roues au niveau de ses extrémités longitudinales: une première roue droite 103 et une première roue gauche 104, chacune orientable par rapport audit premier axe 102 respectivement selon un premier axe Z1 sensiblement vertical du véhicule tracté 100 et un deuxième axe Z2 sensiblement vertical du véhicule tracté 100, et
- un deuxième essieu directeur 101', décalé du premier essieu directeur 101 selon la direction longitudinale X du véhicule tracté 100, avec un deuxième axe 102', et recevant également deux roues au niveau de ses extrémités longitudinales : une deuxième roue droite 103' et une deuxième roue gauche 104', chacune orientable par rapport audit deuxième axe 102' respectivement selon un premier axe Z1' sensiblement vertical du véhicule tracté 100 et un deuxième axe Z2' sensiblement vertical du véhicule tracté 100.

Ledit dispositif 1 peut alors comprendre :
- un premier actionneur hydraulique 31 prévu pour être relié à au moins une roue 103, 104 du premier essieu directeur 101, de sorte à entraîner le pivotement desdites roues 103, 104 par rapport audit premier axe 102 respectivement autour dudit premier axe Z1 et du deuxième axe Z2, et relié au premier 23 et/ou au deuxième 24 orifice de sortie d'huile du distributeur hydraulique 2, de sorte que son alimentation en fluide par ledit premier orifice 23 entraîne le pivotement de la première roue droite 103 et de la première roue gauche 104 par rapport audit premier axe 102 dans un premier sens de rotation S1, respectivement autour dudit premier axe Z1 et du deuxième axe Z2, et/ou que son alimentation en fluide par ledit deuxième orifice 24 entraîne le pivotement de la première roue droite 103 et de la première roue gauche 104 par rapport audit premier axe 102 dans un deuxième sens de rotation S2, opposé au premier sens de rotation S1, respectivement autour dudit premier axe Z1 et du deuxième axe Z2,
- un deuxième actionneur hydraulique 32 prévu pour être relié à au moins une roue 103', 104' du deuxième essieu directeur 101', de sorte à entraîner le pivotement desdites roues 103', 104' par rapport audit deuxième axe 102' respectivement autour dudit premier axe Z1' et du deuxième axe Z2', et relié au premier 23 et/ou au deuxième 24 orifice de sortie d'huile du distributeur hydraulique 2, de sorte que son alimentation en fluide par ledit premier orifice 23 entraîne le pivotement de la deuxième roue droite 103' et de la deuxième roue gauche 104' par rapport audit deuxième axe 102' dans le deuxième sens de rotation S2, respectivement autour dudit premier axe Z1' et du deuxième axe Z2', et/ou que son alimentation en fluide par ledit deuxième orifice 24 entraîne le pivotement de la deuxième roue droite 103' et de la deuxième roue gauche 104' par rapport audit deuxième axe 102' dans le premier sens de rotation S1 respectivement autour dudit premier axe Z1 et du deuxième axe Z2.

Cette disposition avantageuse de l'invention permet avantageusement de forcer l'orientation des roues 103, 103', 104, 104' des deux essieux directeurs 101, 101' du véhicule tracté 100 de s'orienter par rapport à la direction longitudinale X du véhicule tracté 100 lors de la prise de virage du véhicule tracteur V auquel est relié ledit véhicule tracté 100, de sorte à faciliter la prise de virage par l'ensemble véhicule tracteur V et véhicule tracté 100, notamment au cours d'une manoeuvre compliquée, impliquant par exemple une marche arrière, et de sorte que les roues 103, 103', 104, 104' de chaque essieu directeur 101, 101' ne risquent pas d'être traînées au sol lors d'une telle prise de virage.

Également, il peut avantageusement être prévu que, lorsque ledit premier actionneur hydraulique 31 et/ou ledit deuxième actionneur hydraulique 32 est alimenté en fluide par ledit premier orifice 23 du distributeur hydraulique 2, alternativement lorsque ledit premier actionneur hydraulique 31 et/ou ledit deuxième actionneur hydraulique 32 est alimenté en fluide par ledit deuxième orifice 24 du distributeur hydraulique 2, les roues 103, 104 du premier essieu directeur 101 peuvent pivoter par rapport au premier axe 102 selon respectivement le premier axe Z1 et le deuxième axe Z2 dans le premier sens de rotation S1 (alternativement dans le deuxième sens de rotation S2, opposé au premier sens de rotation S1), tandis que les roues 103', 104' du deuxième essieu directeur 101' peuvent pivoter par rapport au deuxième axe 102' selon respectivement le premier axe Z1' et le deuxième axe Z2' dans le deuxième sens de rotation S2, opposé audit premier sens de rotation S1 (alternativement dans le premier sens de rotation S1, opposé au deuxième sens de rotation S2), et avantageusement d'une valeur absolue d'angle sensiblement identique, ce qui facilite la prise de virage par ledit véhicule tracté 100 lors de la prise de virage dudit véhicule tracteur V auquel elle est reliée, et empêche le blocage de ses roues 103, 103', 104, 104', ou la mise en crabe dudit véhicule tracté 100.

Avantageusement, l'ensemble des dispositions décrites précédemment concernant un essieu directeur 101, 101' d'un véhicule tracté 100 peuvent s'appliquer, seules ou en combinaison, au premier 101 et/ou au deuxième 101' essieu directeur du véhicule tracté 100. Également, le premier essieu directeur 101 peut être sensiblement identique au deuxième essieu directeur 101'.

De même, l'ensemble des dispositions décrites précédemment concernant un actionneur hydraulique 31, 32 du dispositif 1 peuvent s'appliquer, seules ou en combinaison, au premier 31 et/ou au deuxième 32 actionneur hydraulique du dispositif 1. Avantageusement, le premier actionneur hydraulique 31 peut être sensiblement identique au deuxième actionneur hydraulique 32.

Comme visible sur les figures 1 à 3 et 11, le véhicule tracté 100 peut également comporter un essieu fixe, i.e. dont les roues ne sont pas orientables par rapport à la direction longitudinale X du véhicule tracté 100 et sont prévues pour demeurer sensiblement parallèles à ladite direction longitudinale X du véhicule tracté 100. Avantageusement, un tel essieu fixe peut être intercalé, selon la direction longitudinale X du véhicule tracté 100, entre le premier 101 et le deuxième 101' essieu directeur.

Selon un mode de réalisation, et comme visible plus particulièrement sur la figure 11 :
- le premier actionneur hydraulique 31 est un premier vérin hydraulique double effet, comprenant une première chambre hydraulique C31 et une deuxième chambre hydraulique C31' séparées entre elles par un piston mobile P31 solidaire d'une tige T31 du premier vérin hydraulique 31,
- le deuxième actionneur hydraulique 32 est un deuxième vérin hydraulique double effet, comprenant une première chambre hydraulique C32 et une deuxième chambre hydraulique C32' séparées entre elles par un piston mobile P32 solidaire d'une tige T32 du deuxième vérin hydraulique 32, avantageusement sensiblement identique audit premier vérin hydraulique 31,
et dans lequel :
- selon une première alternative, la première chambre hydraulique C31 du premier vérin hydraulique 31 est reliée hydrauliquement au premier orifice 23 du distributeur hydraulique 2, la première chambre hydraulique C32 du deuxième vérin hydraulique 32 est reliée au deuxième orifice 24 du distributeur hydraulique 2 et la deuxième chambre hydraulique C31' du premier vérin hydraulique 31 est reliée à la deuxième chambre hydraulique C32' du deuxième vérin 32 par une troisième conduite 35, et de sorte que les roues 103, 104 du premier essieu directeur 101 soient prévues pour pivoter par rapport au premier axe 102 autour de leur axe de rotation respectif Z1, Z2 en sens inverse des roues 103', 104' du deuxième essieu directeur 101' par rapport au deuxième axe 102' autour de leur axe de rotation respectif Z1', Z2', et avantageusement d'une valeur absolue d'angle sensiblement identique, ou
- selon une deuxième alternative, la deuxième chambre hydraulique C31' du premier vérin hydraulique 31 est reliée hydrauliquement au deuxième orifice 24 du distributeur hydraulique 2, la deuxième chambre hydraulique C32' du deuxième vérin hydraulique 32 est reliée au premier orifice 23 du distributeur hydraulique 2 et la première chambre hydraulique C31 du premier vérin hydraulique 31 est reliée à la première chambre hydraulique C32 du deuxième vérin 32 par une quatrième conduite 34', et de sorte que les roues 103, 104 du premier essieu directeur 101 soient prévues pour pivoter par rapport au premier axe 102 autour de leur axe de rotation respectif Z1, Z2 en sens inverse des roues 103', 104' du deuxième essieu directeur 101' s par rapport au deuxième axe 102' autour de leur axe de rotation respectif Z1', Z2', et avantageusement d'une valeur absolue d'angle sensiblement identique.

Grâce à cette disposition avantageuse de l'invention les roues 103, 104 du premier essieu directeur 101 peuvent pivoter par rapport au premier axe 102, respectivement autour du premier Z1 et du deuxième Z2 axe en sens inverse des roues 103', 104' du deuxième essieu directeur 101' par rapport au deuxième axe 102', respectivement autour du premier axe Z1' et du deuxième axe Z2', et avantageusement d'une valeur absolue d'angle sensiblement identique, sans nécessiter de raccorder chacun des deux vérins hydrauliques 31, 32 à chacun des deux orifices de sortie de fluide 23, 24 du distributeur hydraulique 2. Cela simplifie la conception du dispositif 1 selon l'invention et réduit son coût de revient.

L'invention concerne également un véhicule tracté 100, comprenant au moins un essieu directeur 101, et notamment un essieu directeur arrière positionné sensiblement à l'arrière dudit véhicule tracté 100 selon la direction longitudinale X du véhicule tracté 100, avec un axe 102 et deux roues arrière : une roue droite 103 et une roue gauche 104, chacune orientable par rapport audit axe 102 respectivement selon un premier axe Z1 sensiblement vertical du véhicule tracté 100 et un deuxième axe Z2 sensiblement vertical du véhicule tracté 100, ainsi qu'un timon 105 prévu pour relier ledit véhicule tracté 100 à un véhicule tracteur V de manière pivotante selon un axe d'articulation ZV sensiblement vertical du véhicule tracté 100 et un dispositif 1 directionnel selon l'un des modes de réalisation décrits précédemment.

Le véhicule tracté 100 peut par exemple être une remorque, et notamment une remorque agricole.

L'ensemble des dispositions décrites précédemment concernant un véhicule tracté 100 équipé d'un dispositif 1 selon l'invention, ou pour lesquelles le dispositif 1 selon l'invention est adapté peuvent s'appliquer, seules ou en combinaison au véhicule tracté 100 selon l'invention.

L'invention concerne enfin, comme visible plus particulièrement sur la figure 8, un ensemble comprenant un véhicule tracteur V, par exemple un véhicule agricole, et un véhicule tracté 100, comme par exemple une remorque, selon l'un des modes de réalisation décrits précédemment, reliée au véhicule tracteur V via son timon 105 de manière pivotante selon un axe d'articulation ZV sensiblement vertical du véhicule tracté 100, et notamment au niveau d'un attelage AV dudit véhicule tracteur V.

L'ensemble des dispositions décrites précédemment concernant un ensemble comprenant un véhicule tracteur V et un véhicule tracté 100 équipée d'un dispositif 1 selon l'invention, ou pour lesquelles le dispositif 1 selon l'invention est adapté peuvent s'appliquer, seules ou en combinaison à l'ensemble selon l'invention.

Naturellement, d'autres modes de réalisation auraient pu être envisagés par l'Homme du métier sans pour autant sortir du cadre de l'invention définie par les revendications ci-après.

### Liste des signes de référence

1. Dispositif directionnel pour véhicule tracté
2. Distributeur hydraulique à moteur rotatif
21. Carter
22. Pignon d'entrée
23. Premier orifice de sortie de fluide
24. Deuxième orifice de sortie de fluide
31, 32. Actionneur hydraulique/vérin hydraulique double effet
C31, C32. Première chambre hydraulique
C31', C32'. Deuxième chambre hydraulique
33, 33', 35. Conduite
34, 34'. Vanne deux voies
4. Système de commande
41. Première bielle
E41. Première extrémité longitudinale
E41'. Deuxième extrémité longitudinale
42. Deuxième bielle
E42. Première extrémité longitudinale
E42'. Deuxième extrémité longitudinale
P42. Perçage traversant
A42. Axe de rotation
43. Pignon de commande
100. Véhicule tracté
101, 101'. Essieu directeur
102, 102'. Axe
103, 103'. Roue droite
104, 104'. Roue gauche
105. Timon
106, 106'. Fusée
107, 107'. Barre de liaison
Z1, Z1', Z2, Z2', Z3, Z4, Z5, ZV. Axe sensiblement vertical
S1. Premier sens de rotation
S2. Deuxième sens de rotation
X. Direction longitudinale
Y. Direction transversale
Z. Direction verticale
V. Véhicule tracteur
AV. Attelage

## Revendications

1. Dispositif (1) directionnel pour véhicule tracté (100) comprenant au moins un essieu directeur (101, 101'), et notamment un essieu directeur arrière positionné sensiblement à l'arrière dudit véhicule tracté (100) selon sa direction longitudinale (X), avec un axe (102, 102') recevant deux roues au niveau de ses extrémités longitudinales : une roue droite (103, 103') et une roue gauche (104, 104'), chacune orientable par rapport audit axe (102, 102') respectivement selon un premier axe (Z1, Z1') sensiblement vertical du véhicule tracté (100) et un deuxième axe (Z2, Z2') sensiblement vertical du véhicule tracté (100), ainsi qu'un timon (105) prévu pour relier ledit véhicule tracté (100) à un véhicule tracteur (V) de manière pivotante selon un axe d'articulation (ZV) sensiblement vertical du véhicule tracté (100), et notamment au niveau d'un attelage (AV) du véhicule tracteur (V), le dispositif directionnel (1) comportant :
- un distributeur hydraulique (2) à moteur rotatif hydraulique, notamment de type ORBITROL, prévu pour être solidaire du véhicule tracté (100), et notamment au niveau ou à proximité du timon (105), avec un carter (21) et un pignon d'entrée (22) rotatif par rapport audit carter (21), un premier orifice (23) de sortie de fluide et un deuxième orifice (24) de sortie de fluide, le distributeur hydraulique (2) étant configuré pour commander la sortie de fluide au niveau du premier orifice (23) ou au niveau du deuxième orifice (24) en fonction de la rotation du pignon d'entrée (22) par rapport au carter (21),
- au moins un actionneur hydraulique (31, 32), notamment prévu pour être solidaire de l'essieu directeur (101, 101') du véhicule tracté (100), et prévu pour être relié à au moins une roue (103, 103', 104, 104') de l'essieu directeur (101, 101') du véhicule tracté (100), de sorte à entraîner le pivotement desdites roues (103, 103', 104, 104') par rapport audit axe (102, 102') de l'essieu directeur (101, 101') respectivement autour dudit premier axe (Z1, Z1') et du deuxième axe (Z2, Z2'), et relié au premier (23) et au deuxième (24) orifice de sortie d'huile du distributeur hydraulique (2), de sorte que son alimentation en fluide par ledit premier orifice (23) entraîne le pivotement de la roue droite (103, 103') et de la roue gauche (104, 104') par rapport audit axe (102) dans un premier sens de rotation (S1), respectivement autour dudit premier axe (Z1, Z1') et du deuxième axe (Z2, Z2'), et que son alimentation en fluide par ledit deuxième orifice (24) entraîne le pivotement de la roue droite (103, 103') et de la roue gauche (104, 104') par rapport audit axe (102, 102') dans un deuxième sens de rotation (S2), opposé au premier sens de rotation (S1), respectivement autour dudit premier axe (Z1, Z1') et du deuxième axe (Z2, Z2'),
- un système de commande (4) relié au pignon d'entrée (22) du distributeur hydraulique (2) et prévu pour être relié également au véhicule tracteur (V), et notamment au niveau ou à proximité de son attelage (AV), auquel est relié le véhicule tracté (100), et configuré de sorte à entraîner la rotation du pignon d'entrée (22) par rapport au carter (21) du distributeur hydraulique (2) lors de la prise de virage du véhicule tracteur (V) auquel est reliée le véhicule tracté (100), et afin de forcer l'orientation des roues (103, 103', 104, 104') de l'essieu directeur (101, 101') du véhicule tracté (100) par rapport à l'axe (102, 102'), respectivement autour dudit premier axe (Z1, Z1') et du deuxième axe (Z2, Z2') en fonction de l'orientation du véhicule tracté (100) par rapport au véhicule tracteur (V) autour de l'axe d'articulation (ZV).

2. Dispositif (1) selon la revendication 1, dans lequel le système de commande (4) comporte :
- une première bielle (41) présentant une première extrémité longitudinale (E41) et une deuxième extrémité longitudinale (E41'), ladite première extrémité longitudinale (E41) de la première bielle (41) étant prévue pour être articulée pivotante selon un troisième axe (Z3) sensiblement vertical du véhicule tracté (100) au véhicule tracteur (V) auquel est reliée le véhicule tracté (100),
- une deuxième bielle (42) présentant une première extrémité longitudinale (E42) et une deuxième extrémité longitudinale (E42'), la deuxième bielle (42) étant articulée pivotante selon un quatrième axe (Z4) sensiblement vertical du véhicule tracté (100) à la deuxième extrémité longitudinale (E41') de la première bielle (41), ladite deuxième extrémité longitudinale (E42') de la deuxième bielle (42) étant prévue pour être articulée pivotante selon un cinquième axe (Z5) sensiblement vertical du véhicule tracté (100) au timon (105) du véhicule tracté (100),
- un pignon de commande (43) solidaire de la deuxième extrémité longitudinale (E42') de la deuxième bielle (42), et engrenant avec le pignon d'entrée (22) du distributeur hydraulique (2),
de sorte que le pivotement du timon (105) du véhicule tracté (100) par rapport au véhicule tracteur (V) autour de l'axe d'articulation (ZV) entraîne la rotation du pignon d'entrée (22) par rapport au carter (21) du distributeur hydraulique (2).

3. Dispositif (1) selon la revendication 2, dans lequel la première bielle (41) est de longueur réglable.

4. Dispositif (1) selon la revendication 2 ou 3, dans lequel la deuxième bielle (42) est configurée de sorte à recevoir la deuxième extrémité longitudinale (E41') de la première bielle (41) selon ledit quatrième axe (Z4) en une pluralité de positions discrètes entre sa première (E42) et sa deuxième (E42') extrémité longitudinale.

5. Dispositif (1) selon la revendication 4, dans lequel une pluralité de perçages (P42) traversant sont ménagés sur ladite deuxième bielle (42), respectivement au niveau de chacune desdites positions discrètes entre sa première (E42) et sa deuxième (E42') extrémité longitudinale, chaque perçage (P42) étant configuré pour recevoir un axe de rotation (A42), relié à ladite deuxième extrémité longitudinale (E41') de la première bielle (41), et s'étendant selon ledit quatrième axe (Z4).

6. Dispositif (1) selon l'une des revendications 1 à 5, dans lequel l'actionneur hydraulique (31, 32) est un vérin hydraulique double effet, comprenant une première chambre hydraulique (C31, C32) et une deuxième chambre hydraulique (C31', C32') séparées entre elles par un piston mobile (P31, P32) solidaire d'une tige (T31, T32) du vérin hydraulique (31, 32), et dans lequel la première chambre hydraulique (C31) est reliée hydrauliquement au premier orifice (23) du distributeur hydraulique (2) et/ou la deuxième chambre hydraulique (C32) est reliée hydrauliquement au deuxième orifice (24) du distributeur hydraulique (2).

7. Dispositif (1) selon la revendication 6, dans lequel la première chambre hydraulique (C31, C32) du vérin hydraulique (31, 32) est reliée à la deuxième chambre hydraulique (C31, C32) du vérin hydraulique (31, 32) par au moins une conduite (33, 33'), au niveau de laquelle est disposée une vanne (34, 34') deux voies pilotable manuellement, électriquement ou hydrauliquement, et configurée pour ouvrir ou fermer ladite conduite (33, 33'), et de sorte que quand ladite vanne (34, 34') est ouverte, les roues (103, 104, 103', 104') de l'essieu directeur (101, 101') sont libres en rotation par rapport à l'axe (102, 102') de l'essieu directeur (101, 101') respectivement autour du premier axe (Z1, Z1') et du deuxième axe (Z2, Z2').

8. Dispositif (1) selon la revendication 7, dans lequel la première chambre hydraulique (C31, C32) du vérin hydraulique (31, 32) est reliée à la deuxième chambre hydraulique (C31', C32') du vérin hydraulique (31, 32) par :
- une première conduite (33) au niveau de laquelle est disposée une première vanne (34) deux voies pilotable électriquement ou hydrauliquement, par l'intermédiaire d'un moyen d'actionnement prévu pour être disposé sur le véhicule tracteur (V), et notamment au niveau ou à proximité d'un poste de pilotage dudit véhicule tracteur (V), et/ou
- une deuxième conduite (33') au niveau de laquelle est disposée une deuxième vanne (34') deux voies pilotable manuellement, par l'intermédiaire d'un moyen d'actionnement prévu pour être disposé sur le véhicule tracté (100).

9. Dispositif (1) selon l'une des revendications 1 à 8 pour véhicule tracté (100) comprenant deux essieux directeurs (101, 101') :
- un premier essieu directeur (101) avec un premier axe (102) recevant deux roues au niveau de ses extrémités longitudinales : une première roue droite (103) et une première roue gauche (104), chacune orientable par rapport audit premier axe (102) respectivement selon un premier axe (Z1) sensiblement vertical du véhicule tracté (100) et un deuxième axe (Z2) sensiblement vertical du véhicule tracté (100), et
- un deuxième essieu directeur (101'), décalé du premier essieu directeur (101) selon la direction longitudinale (X) du véhicule tracté (100), avec un deuxième axe (102'), et recevant également deux roues au niveau de ses extrémités longitudinales: une deuxième roue droite (103') et une deuxième roue gauche (104'), chacune orientable par rapport audit deuxième axe (102') respectivement selon un premier axe (Z1') sensiblement vertical du véhicule tracté (100) et un deuxième axe (Z2') sensiblement vertical du véhicule tracté (100),
ledit dispositif (1) comprenant :
- un premier actionneur hydraulique (31) prévu pour être relié à au moins une roue (103, 104) du premier essieu directeur (101), de sorte à entraîner le pivotement desdites roues (103, 104) par rapport audit premier axe (102) respectivement autour dudit premier axe (Z1) et du deuxième axe (Z2), et relié au premier (23) et/ou au deuxième (24) orifice de sortie d'huile du distributeur hydraulique (2), de sorte que son alimentation en fluide par ledit premier orifice (23) entraîne le pivotement de la première roue droite (103) et de la première roue gauche (104) par rapport audit premier axe (102) dans un premier sens de rotation (S1), respectivement autour dudit premier axe (Z1) et du deuxième axe (Z2), et/ou que son alimentation en fluide par ledit deuxième orifice (24) entraîne le pivotement de la première roue droite (103) et de la première roue gauche (104) par rapport audit premier axe (102) dans un deuxième sens de rotation (S2), opposé au premier sens de rotation (S1), respectivement autour dudit premier axe (Z1) et du deuxième axe (Z2),
- un deuxième actionneur hydraulique (32) prévu pour être relié à au moins une roue (103', 104') du deuxième essieu directeur (101'), de sorte à entraîner le pivotement desdites roues (103', 104') par rapport audit deuxième axe (102') respectivement autour dudit premier axe (Z1') et du deuxième axe (Z2'), et relié au premier (23) et/ou au deuxième (24) orifice de sortie d'huile du distributeur hydraulique (2), de sorte que son alimentation en fluide par ledit premier orifice (23) entraîne le pivotement de la deuxième roue droite (103') et de la deuxième roue gauche (104') par rapport audit deuxième axe (102') dans le deuxième sens de rotation (S2), respectivement autour dudit premier axe (Z1') et du deuxième axe (Z2'), et/ou que son alimentation en fluide par ledit deuxième orifice (24) entraîne le pivotement de la deuxième roue droite (103') et de la deuxième roue gauche (104') par rapport audit deuxième axe (102') dans le premier sens de rotation (S1) respectivement autour dudit premier axe (Z1) et du deuxième axe (Z2).

10. Dispositif (1) selon la revendication 9, prise en combinaison avec l'une des revendications 6 à 8, dans lequel :
- le premier actionneur hydraulique (31) est un premier vérin hydraulique double effet, comprenant une première chambre hydraulique (C31) et une deuxième chambre hydraulique (C31') séparées entre elles par un piston mobile (P31) solidaire d'une tige (T31) du premier vérin hydraulique (31),
- le deuxième actionneur hydraulique (32) est un deuxième vérin hydraulique double effet, comprenant une première chambre hydraulique (C32) et une deuxième chambre hydraulique (C32') séparées entre elles par un piston mobile (P32) solidaire d'une tige (T32) du deuxième vérin hydraulique (32),
et dans lequel :
- selon une première alternative, la première chambre hydraulique (C31) du premier vérin hydraulique (31) est reliée hydrauliquement au premier orifice (23) du distributeur hydraulique (2), la première chambre hydraulique (C32) du deuxième vérin hydraulique (32) est reliée au deuxième orifice (24) du distributeur hydraulique (2) et la deuxième chambre hydraulique (C31') du premier vérin hydraulique (31) est reliée à la deuxième chambre hydraulique (C32') du deuxième vérin (32) par une troisième conduite (35), et de sorte que les roues (103, 104) du premier essieu directeur (101) soient prévues pour pivoter par rapport au premier axe (102) autour de leur axe de rotation respectif (Z1, Z2) en sens inverse des roues (103', 104') du deuxième essieu directeur (101') par rapport au deuxième axe (102') autour de leur axe de rotation respectif (Z1', Z2'), ou
- selon une deuxième alternative, la deuxième chambre hydraulique (C31') du premier vérin hydraulique (31) est reliée hydrauliquement au deuxième orifice (24) du distributeur hydraulique (2), la deuxième chambre hydraulique (C32') du deuxième vérin hydraulique (32) est reliée au premier orifice (23) du distributeur hydraulique (2) et la première chambre hydraulique (C31) du premier vérin hydraulique (31) est reliée à la première chambre hydraulique (C32) du deuxième vérin (32) par une quatrième conduite (34'), et de sorte que les roues (103, 104) du premier essieu directeur (101) soient prévues pour pivoter par rapport au premier axe (102) autour de leur axe de rotation respectif (Z1, Z2) en sens inverse des roues (103', 104') du deuxième essieu directeur (101') par rapport au deuxième axe (102') autour de leur axe de rotation respectif (Z1', Z2').

11. Véhicule tracté (100) comprenant au moins un essieu directeur (101), et notamment un essieu directeur arrière positionné sensiblement à l'arrière dudit véhicule tracté (100) selon la direction longitudinale (X) du véhicule tracté (100), avec un axe (102) et deux roues arrière : une roue droite (103) et une roue gauche (104), chacune orientable par rapport audit axe (102) respectivement selon un premier axe (Z1) sensiblement vertical du véhicule tracté (100) et un deuxième axe (Z2) sensiblement vertical du véhicule tracté (100), ainsi qu'un timon (105) prévu pour relier ledit véhicule tracté (100) à un véhicule tracteur (V) de manière pivotante selon un axe d'articulation (ZV) sensiblement vertical du véhicule tracté (100) et un dispositif (1) directionnel selon l'une des revendications 1 à 10 solidaire du véhicule tracté (100).

12. Ensemble comprenant un véhicule tracteur (V) et un véhicule tracté (100) selon la revendication 11, reliée au véhicule tracteur (V) via son timon (105) de manière pivotante selon un axe d'articulation (ZV), et notamment au niveau d'un attelage (AV) dudit véhicule tracteur (V).

## Patentansprüche

1. Lenkvorrichtung (1) für ein gezogenes Fahrzeug (100), umfassend wenigstens eine Lenkachse (101, 101') und insbesondere eine hintere Lenkachse, welche im Wesentlichen an der Hinterseite des gezogenen Fahrzeugs (100) bezüglich seiner longitudinalen Richtung (X) positioniert ist, mit einer Achse (102, 102'), welche zwei Räder auf dem Niveau seiner longitudinalen Enden aufnimmt: ein rechtes Rad (103, 103') und ein linkes Rad (104, 104'), welche beide bezüglich der Achse (102, 102') jeweils bezüglich einer ersten, im Wesentlichen vertikalen Achse (Z1, Z1') des gezogenen Fahrzeugs (100) und einer zweiten, im Wesentlichen vertikalen Achse (Z2, Z2`) des gezogenen Fahrzeugs (100) orientierbar sind, sowie eine Deichsel (105), welche dazu vorgesehen ist, das gezogene Fahrzeug (100) an einem Zugfahrzeug (V) um eine im Wesentlichen vertikale Gelenkachse (ZV) des gezogenen Fahrzeugs (100) schwenkbar anzubringen, und wobei insbesondere auf dem Niveau einer Kupplung (AV) des Zugfahrzeugs (V) die Lenkvorrichtung (1) umfasst:
- eine hydraulische Verteilungseinheit (2) mit hydraulischem Drehmotor, insbesondere vom ORBITROL-Typ, welche dazu vorgesehen ist, mit dem Zugfahrzeug (100) verbunden zu sein, und insbesondere auf dem Niveau oder in der Nähe der Deichsel (105) mit einem Gehäuse (21) und einem Eingangszahnrad (22), welches bezüglich des Gehäuses (21) rotierbar ist, einer ersten Ausgangsöffnung (23) für Fluid und einer zweiten Ausgangsöffnung (24) für Fluid, wobei die hydraulische Verteilungseinheit (2) dazu eingerichtet ist, das Austreten von Fluid auf dem Niveau der ersten Öffnung (23) oder auf dem Niveau der zweiten Öffnung (24) als Funktion der Rotation des Eingangszahnrads (22) bezüglich des Gehäuses (21) zu steuern,
- wenigstens einen hydraulischen Aktuator (31, 32), welcher insbesondere dazu vorgesehen ist, mit der Lenkachse (101, 101') des gezogenen Fahrzeugs (100) verbunden zu sein, und dazu vorgesehen ist, an wenigstens einem Rad (103, 103`, 104, 104') der Lenkachse (101, 101') des gezogenen Fahrzeugs (100) derart angebracht zu sein, dass das Schwenken der Räder (103, 103', 104, 104') bezüglich der Achse (102, 102') der Lenkachse (101, 101 `) um die erste Achse (Z1, Z1 `) bzw. die zweite Achse (Z2, Z2`) angetrieben wird, und mit der ersten (23) und mit der zweiten (24) Ausgangsöffnung für Öl der hydraulischen Verteilungseinheit (2) derart verbunden ist, dass seine Versorgung mit Fluid durch die erste Öffnung (23) das Schwenken des rechten Rads (103, 103') und des linken Rads (104, 104') bezüglich der Achse (102) in einem ersten Rotationssinn (S1) um die erste Achse (Z1, Z1') bzw. die zweite Achse (Z2, Z2`) antreibt, und dass seine Versorgung mit Fluid durch die zweite Öffnung (24) das Schwenken des rechten Rads (103, 103') und des linken Rads (104, 104') bezüglich der Achse (102, 102') in einem zweiten Rotationssinn (S2) entgegen dem ersten Rotationssinn (S1) um die erste Achse (Z1, Z1') bzw. die zweite Achse (Z2, Z2`) antreibt,
- ein Steuersystem (4), welches mit dem Eingangszahnrad (22) der hydraulischen Verteilungseinheit (2) verbunden und dazu vorgesehen ist, ebenfalls mit dem Zugfahrzeug (V) verbunden zu sein, und an welchem insbesondere auf dem Niveau oder in der Nähe seiner Kupplung (AV) das gezogene Fahrzeug (100) angebracht ist, und derart eingerichtet ist, dass die Rotation des Eingangszahnrads (22) bezüglich des Gehäuses (21) der hydraulischen Verteilungseinheit (2) während der Kurvenfahrt des Zugfahrzeugs (V) angetrieben wird, an welchem das gezogene Fahrzeug (100) angebracht ist, und um die Orientierung der Räder (103, 103', 104, 104') der Lenkachse (101, 101') des gezogenen Fahrzeugs (100) bezüglich der Achse (102, 102') um die erste Achse (Z1, Z1') bzw. die zweite Achse (Z2, Z2`) als Funktion der Orientierung des gezogenen Fahrzeugs (100) bezüglich des Zugfahrzeugs (V) um die Gelenkachse (ZV) zu erzwingen.

2. Vorrichtung (1) nach Anspruch 1, wobei das Steuersystem (4) umfasst:
- eine erste Lenkstange (41), welche ein erstes longitudinales Ende (E41) und ein zweites longitudinales Ende (E41') aufweist, wobei das erste longitudinale Ende (E41) der ersten Lenkstange (41) dazu vorgesehen ist, schwenkend bezüglich einer dritten, im Wesentlichen vertikalen Achse (Z3) des gezogenen Fahrzeugs (100) an dem Zugfahrzeug (V) angelenkt zu sein, an welcher das gezogene Fahrzeug (100) verbunden ist,
- eine zweite Lenkstange (42), welche ein erstes longitudinales Ende (E42) und ein zweites longitudinales Ende (E42`) aufweist, wobei die zweite Lenkstange (42) schwenkend bezüglich einer vierten, im Wesentlichen vertikalen Achse (Z4) des gezogenen Fahrzeugs (100) an dem zweiten longitudinalen Ende (E41') der ersten Lenkstange (41) angelenkt ist, wobei das zweite longitudinale Ende (E42') der zweiten Lenkstange (42) dazu vorgesehen ist, schwenkend bezüglich einer fünften, im Wesentlichen vertikalen Achse (Z5) des gezogenen Fahrzeugs (100) an der Deichsel (105) des gezogenen Fahrzeugs (100) angelenkt zu sein,
- ein Steuerzahnrad (43), welches mit dem zweiten longitudinalen Ende (E42') der zweiten Lenkstange (42) verbunden ist und mit dem Eingangszahnrad (22) der hydraulischen Verteilungseinheit (2) eingreift,
so dass das Schwenken der Deichsel (105) des gezogenen Fahrzeugs (100) bezüglich des Zugfahrzeugs (V) um die Gelenkachse (ZV) die Rotation des Eingangszahnrads (22) bezüglich des Gehäuses (21) der hydraulischen Verteilungseinheit (2) antreibt.

3. Vorrichtung (1) nach Anspruch 2, wobei die erste Lenkstange (41) von einstellbarer Länge ist.

4. Vorrichtung (1) nach Anspruch 2 oder 3, wobei die zweite Lenkstange (42) derart eingerichtet ist, dass das zweite longitudinale Ende (E41') der ersten Lenkstange (41) bezüglich der vierten Achse (Z4) in einer Mehrzahl von diskreten Positionen zwischen seinem ersten (E42) und seinem zweiten (E42') longitudinalen Ende aufgenommen wird.

5. Vorrichtung (1) nach Anspruch 4, wobei eine Mehrzahl von Bohrungen (P42) an der zweiten Lenkstange (42) jeweils auf dem Niveau von jeder der diskreten Positionen zwischen ihrem ersten (E42) und ihrem zweiten (E42') longitudinalen Ende durchgehend vorgesehen sind, wobei jede Bohrung (P42) dazu eingerichtet ist, eine Rotationsachse (A42) aufzunehmen, welche an dem zweiten longitudinalen Ende (E41') der ersten Lenkstange (41) angebracht ist und sich gemäß der vierten Achse (Z4) erstreckt.

6. Vorrichtung (1) nach einem der Ansprüche 1 bis 5, wobei der hydraulische Aktuator (31, 32) ein doppelt wirkender Hydraulikzylinder ist, umfassend eine erste Hydraulikkammer (C31, C32) und eine zweite Hydraulikkammer (C31', C32'), welche untereinander durch einen bewegbaren Kolben (P31, P32) getrennt sind, welcher mit einer Kolbenstange (T31, T32) des Hydraulikzylinders (31, 32) verbunden ist, und wobei die erste Hydraulikkammer (C31) hydraulisch mit der ersten Öffnung (23) der hydraulischen Verteilungseinheit (2) verbunden ist und/oder die zweite Hydraulikkammer (C32) hydraulisch mit der zweiten Öffnung (24) der hydraulischen Verteilungseinheit (2) verbunden ist.

7. Vorrichtung (1) nach Anspruch 6, wobei die erste Hydraulikkammer (C31, C32) des Hydraulikzylinders (31, 32) mit der zweiten Hydraulikkammer (C31, C32) des Hydraulikzylinders (31, 32) über wenigstens eine Leitung (33, 33`) verbunden ist, auf deren Niveau ein elektrisch oder hydraulisch manuell steuerbares Zweiweg-Ventil (34, 34') angeordnet ist, und dazu eingerichtet ist, die Leitung (33, 33`) derart zu öffnen oder schließen, dass wenn das Ventil (34, 34') geöffnet ist, die Räder (103, 104, 103', 104') der Lenkachse (101, 101 `) frei in Rotation bezüglich der Achse (102, 102') der Lenkachse (101, 101') um die erste Achse (Z1, Z1') bzw. die zweite Achse (Z2, Z2`) sind.

8. Vorrichtung (1) nach Anspruch 7, wobei die erste Hydraulikkammer (C31, C32) des Hydraulikzylinders (31, 32) mit der zweiten Hydraulikkammer (C31', C32`) des Hydraulikzylinders (31, 32) verbunden ist über:
- eine erste Leitung (33), auf deren Niveau ein erstes Zweiweg-Ventil (34) angeordnet ist, welches mittels eines Betätigungsmittels elektrisch oder hydraulisch steuerbar ist, welches dazu vorgesehen ist, an dem Zugfahrzeug (V) und insbesondere auf dem Niveau oder in der Nähe eines Fahrerstands des Zugfahrzeugs (V) angeordnet zu sein, und/oder
- eine zweite Leitung (33`), auf deren Niveau ein zweites Zweiweg-Ventil (34`) angeordnet ist, welches manuell mittels eines Betätigungsmittels steuerbar ist, welches dazu vorgesehen ist, an dem gezogenen Fahrzeug (100) angeordnet zu sein.

9. Vorrichtung (1) nach einem der Ansprüche 1 bis 8 für ein gezogenes Fahrzeug (100), welches zwei Lenkachsen (101, 101') umfasst:
- eine erste Lenkachse (101) mit einer ersten Achse (102), welche zwei Räder auf dem Niveau ihrer longitudinalen Enden aufnimmt: ein erstes rechtes Rad (103) und ein erstes linkes Rad (104), welche jeweils bezüglich der ersten Achse (102) gemäß einer ersten, im Wesentlichen vertikalen Achse (Z1) des gezogenen Fahrzeugs (100) bzw. einer zweiten, im Wesentlichen vertikalen Achse (Z2) des gezogenen Fahrzeugs (100) orientierbar sind, und
- eine zweite Lenkachse (101'), welche gegenüber der ersten Lenkachse (101) gemäß der longitudinalen Richtung (X) des gezogenen Fahrzeugs (100) versetzt ist, mit einer zweiten Achse (102'), und welche ebenfalls zwei Räder auf dem Niveau ihrer longitudinalen Enden aufnimmt: ein zweites rechtes Rad (103') und ein zweites linkes Rad (104'), welche jeweils bezüglich der zweiten Achse (102') gemäß einer ersten, im Wesentlichen vertikalen Achse (Z1') des gezogenen Fahrzeugs (100) bzw. einer zweiten, im Wesentlichen vertikalen Achse (Z2`) des gezogenen Fahrzeugs (100) orientierbar sind,
wobei die Vorrichtung (1) umfasst:
- einen ersten hydraulischen Aktuator (31), welcher dazu vorgesehen ist, mit wenigstens einem Rad (103, 104) der ersten Lenkachse (101) derart verbunden zu sein, dass das Schwenken der Räder (103, 104) bezüglich der ersten Achse (102) um die erste Achse (Z1) bzw. die zweite Achse (Z2) angetrieben wird, und mit der ersten (23) und/oder mit der zweiten Ausgangsöffnung (24) für Öl der hydraulischen Verteilungseinheit (2) derart verbunden ist, dass seine Versorgung mit Fluid durch die erste Öffnung (23) das Schwenken des ersten rechten Rads (103) und des ersten linken Rads (104) bezüglich der ersten Achse (102) in einem ersten Rotationssinn (S1) um die erste Achse (Z1) bzw. um die zweite Achse (Z2) antreibt, und/oder dass seine Versorgung mit Fluid durch die zweite Öffnung (24) das Schwenken des ersten rechten Rads (103) und des ersten linken Rads (104) bezüglich der ersten Achse (102) in einem zweiten Rotationssinn (S2) entgegen dem ersten Rotationssinn (S1) um die erste Achse (Z1) bzw. um die zweite Achse (Z2) antreibt,
- einen zweiten hydraulischen Aktuator (32), welcher dazu vorgesehen ist, mit wenigstens einem Rad (103', 104') der zweiten Lenkachse (101') derart verbunden zu sein, dass das Schwenken der Räder (103', 104') bezüglich der zweiten Achse (102') um die erste Achse (Z1') bzw. die zweite Achse (Z2`) angetrieben wird, und mit der ersten (23) und/oder mit der zweiten Ausgangsöffnung (24) für Öl der hydraulischen Verteilungseinheit (2) derart verbunden ist, dass seine Versorgung mit Fluid durch die erste Öffnung (23) das Schwenken des zweiten rechten Rads (103') und des zweiten linken Rads (104') bezüglich der zweiten Achse (102') in dem zweiten Rotationssinn (S2) um die erste Achse (Z1') bzw. um die zweite Achse (Z2`) antreibt, und/oder dass seine Versorgung mit Fluid durch die zweite Öffnung (24) das Schwenken des zweiten rechten Rads (103') und des zweiten linken Rads (104') bezüglich der zweiten Achse (102') in dem ersten Rotationssinn (S1) um die erste Achse (Z1) bzw. um die zweite Achse (Z2) antreibt.

10. Vorrichtung (1) nach Anspruch 9, genommen in Kombination mit einem der Ansprüche 6 bis 8, wobei:
- der erste hydraulische Aktuator (31) ein erster doppelt wirkender Hydraulikzylinder ist, umfassend eine erste Hydraulikkammer (C31) und eine zweite Hydraulikkammer (C31'), welche untereinander durch einen beweglichen Kolben (P31) getrennt sind, welcher mit einer Kolbenstange (T31) des ersten Hydraulikzylinders (31) verbunden ist,
- der zweite hydraulische Aktuator (32) ein zweiter doppelt wirkender Hydraulikzylinder ist, welcher eine erste Hydraulikkammer (C32) und eine zweite Hydraulikkammer (C32') umfasst, welche untereinander durch einen beweglichen Kolben (P32) getrennt sind, welcher mit einer Kolbenstange (T32) des zweiten Hydraulikzylinders (32) verbunden ist, und wobei:
- gemäß einer ersten Alternative die erste Hydraulikkammer (C31) des ersten Hydraulikzylinders (31) hydraulisch mit der ersten Öffnung (23) der hydraulischen Verteilungseinheit (2) verbunden ist, die erste Hydraulikkammer (C32) des zweiten Hydraulikzylinders (32) mit der zweiten Öffnung (24) der hydraulischen Verteilungseinheit (2) verbunden ist, und die zweite Hydraulikkammer (C31') des ersten Hydraulikzylinders (31) mit der zweiten Hydraulikkammer (C32') des zweiten Zylinders (32) über eine dritte Leitung (35) derart verbunden ist, dass die Räder (103, 104) der ersten Lenkachse (101) dazu vorgesehen sind, bezüglich der ersten Achse (102) um ihre jeweilige Rotationsachse (Z1, Z2) in einem inversen Sinn zu den Rädern (103', 104`) der zweiten Lenkachse (101') bezüglich der zweiten Achse (102') um ihre jeweilige Rotationsachse (Z1', Z2') zu schwenken, oder
- gemäß einer zweiten Alternative die zweite Hydraulikkammer (C31') des ersten Hydraulikzylinders (31) hydraulisch mit der zweiten Öffnung (24) der hydraulischen Verteilungseinheit (2) verbunden ist, die zweite Hydraulikkammer (C32') des zweiten Hydraulikzylinders (32) mit der ersten Öffnung (23) der hydraulischen Verteilungseinheit (2) verbunden ist, und die erste Hydraulikkammer (C31) des ersten Hydraulikzylinders (31) mit der ersten Hydraulikkammer (C32) des zweiten Zylinders (32) über eine vierte Leitung (34') derart verbunden ist, dass die Räder (103, 104) der ersten Lenkachse (101) dazu vorgesehen sind, bezüglich der ersten Achse (102) um ihre jeweilige Rotationsachse (Z1, Z2) in einem inversen Sinn zu den Rädern (103', 104') der zweiten Lenkachse (101') bezüglich der zweiten Achse (102') um ihre jeweilige Rotationsachse (Z1 `, Z2`) zu schwenken.

11. Gezogenes Fahrzeug (100), umfassend wenigstens eine Lenkachse (101) und insbesondere eine hintere Lenkachse, welche im Wesentlichen an der Hinterseite des gezogenen Fahrzeugs (100) gemäß der longitudinalen Richtung (X) des gezogenen Fahrzeugs (100) positioniert ist, mit einer Achse (102) und zwei Hinterrädern: einem rechten Rad (103) und einem linken Rad (104), welche beide bezüglich der Achse (102) gemäß einer ersten, im Wesentlichen vertikalen Achse (Z1) des gezogenen Fahrzeugs (100) bzw. einer zweiten, im Wesentlichen vertikalen Achse (Z2) des Fahrzeugs (100) orientierbar sind, sowie eine Deichsel (105), welche dazu vorgesehen ist, das gezogene Fahrzeug (100) an einem Zugfahrzeug (V) um eine im Wesentlichen vertikale Gelenkachse (ZV) des gezogenen Fahrzeugs (100) schwenkend anzubringen, und eine Lenkvorrichtung (1) nach einem der Ansprüche 1 bis 10, welche mit dem gezogenen Fahrzeug (100) verbunden ist.

12. Anordnung, umfassend ein Zugfahrzeug (V) und ein gezogenes Fahrzeug (100) nach Anspruch 11, welches mit dem Zugfahrzeug (V) mittels seiner Deichsel (105) in um eine Gelenkachse (ZV) schwenkbarer Weise und insbesondere auf dem Niveau einer Kupplung (AV) des Zugfahrzeugs (V) verbunden ist.

## Claims

1. A steering device (1) for a towed vehicle (100) comprising at least one steered axle (101, 101'), and in particular a rear steered axle positioned substantially at the rear of said towed vehicle (100) according to its longitudinal direction (X), with an axis (102, 102') receiving two wheels at its longitudinal ends: a right wheel (103, 103') and a left wheel (104, 104'), each steerable relative to said axis (102, 102') respectively about a first axis (Z1, Z1') substantially vertical to the towed vehicle (100) and a substantially vertical second axis (Z2, Z2') of the towed vehicle (100), as well as a drawbar (105) intended to pivotably link said towed vehicle (100) to a towing vehicle (V) about a substantially vertical articulation axis (ZV) of the towed vehicle (100), and in particular at a towing hitch (AV) of the towing vehicle (V), the steering device (1) including:
- a hydraulic distributor (2) with a hydraulic rotary motor, in particular of the ORBITROL type, intended to be secured to the towed vehicle (100), and in particular at or proximate to the drawbar (105), with a casing (21) and an input gear (22) rotatable relative to said casing (21), a first fluid outlet orifice (23) and a second fluid outlet orifice (24), the hydraulic distributor (2) being configured to control the fluid outlet at the first orifice (23) or at the second orifice (24) according to the rotation of the input pinion (22) relative to the casing (21),
- at least one hydraulic actuator (31, 32), in particular intended to be secured to the steered axle (101, 101') of the towed vehicle (100), and intended to be linked to at least one wheel (103, 103', 104, 104') of the steered axle (101, 101') of the towed vehicle (100), so as to cause the pivoting of said wheels (103, 103', 104, 104') relative to said axis (102, 102') of the steered axle (101, 101') respectively about said first axis (Z1, Z1') and the second axis (Z2, Z2'), and connected to the first (23) and to the second (24) oil outlet orifice of the hydraulic distributor (2), so that its fluid supply through said first orifice (23) causes the pivoting of the right wheel (103, 103') and of the left wheel (104, 104') relative to said axis (102) in a first direction of rotation (S1), respectively about said first axis (Z1, Z1') and the second axis (Z2, Z2'), and that its fluid supply through said second orifice (24) causes the pivoting of the right wheel (103, 103') and of the left wheel (104, 104') relative to said axis (102, 102') in a second direction of rotation (S2), opposite to the first direction of rotation (S1), respectively about said first axis (Z1, Z1') and the second axis (Z2, Z2'),
- a control system (4) linked to the input pinion (22) of the hydraulic distributor (2) and intended to be also linked to the towing vehicle (V), and in particular at or proximate to its towing hitch (AV), to which the towed vehicle (100) is linked, and configured so as to cause the rotation of the input gear (22) relative to the casing (21) of the hydraulic distributor (2) during cornering of the towing vehicle (V) to which the towed vehicle (100) is linked, and in order to force the orientation of the wheels (103, 103', 104, 104') of the steered axle (101, 101') of the towed vehicle (100) relative to the axis (102, 102'), respectively about said first axis (Z1, Z1') and the second axis (Z2, Z2') according to the orientation of the towed vehicle (100) relative to the towing vehicle (V) about the articulation axis (ZV).

2. The device (1) according to claim 1, wherein the control system (4) includes:
- a first connecting rod (41) having a first longitudinal end (E41) and a second longitudinal end (E41'), said first longitudinal end (E41) of the first connecting rod (41) being intended to be pivotably articulated about a substantially vertical third axis (Z3) of the towed vehicle (100) to the towing vehicle (V) to which the towed vehicle (100) is linked,
- a second connecting rod (42) having a first longitudinal end (E42) and a second longitudinal end (E42'), the second connecting rod (42) being pivotably articulated according to a substantially vertical fourth axis (Z4) of the towed vehicle (100) at the second longitudinal end (E41') of the first connecting rod (41), said second longitudinal end (E42') of the second connecting rod (42) being intended to be pivotably articulated about a substantially vertical fifth axis (Z5) of the towed vehicle (100) to the drawbar (105) of the towed vehicle (100),
- a control pinion (43) secured to the second longitudinal end (E42') of the second connecting rod (42), and meshing with the input pinion (22) of the hydraulic distributor (2),
so that pivoting of the drawbar (105) of the towed vehicle (100) relative to the towing vehicle (V) about the articulation axis (ZV) causes the rotation of the input pinion (22) relative to the casing (21) of the hydraulic distributor (2).

3. The device (1) according to claim 2, wherein the first connecting rod (41) has an adjustable length.

4. The device (1) according to claim 2 or 3, wherein the second connecting rod (42) is configured so as to receive the second longitudinal end (E41') of the first connecting rod (41) according to said fourth axis (Z4) at a plurality of discrete positions between its first (E42) and its second (E42') longitudinal end.

5. The device (1) according to claim 4, wherein a plurality of through bores (P42) are formed on said second connecting rod (42), respectively at each of said discrete positions between its first (E42) and its second (E42') longitudinal end, each bore (P42) being configured to receive an axis of rotation (A42), linked to said second longitudinal end (E41') of the first connecting rod (41), and extending according to said fourth axis (Z4).

6. The device (1) according to one of claims 1 to 5, wherein the hydraulic actuator (31, 32) is a double-acting hydraulic cylinder, comprising a first hydraulic chamber (C31, C32) and a second hydraulic chamber (C31', C32') separated from each other by a movable piston (P31, P32) secured to a rod (T31, T32) of the hydraulic cylinder (31, 32), and wherein the first hydraulic chamber (C31) is hydraulically connected to the first orifice (23) of the hydraulic distributor (2) and/or the second hydraulic chamber (C32) is hydraulically connected to the second orifice (24) of the hydraulic distributor (2).

7. The device (1) according to claim 6, wherein the first hydraulic chamber (C31, C32) of the hydraulic cylinder (31, 32) is connected to the second hydraulic chamber (C31, C32) of the hydraulic cylinder (31, 32) via at least one pipe (33, 33'), at which a two-way valve (34, 34') is arranged which can be controlled manually, electrically or hydraulically, and configured to open or close said pipe (33, 33'), and so that when said valve (34, 34') is open, the wheels (103, 104, 103', 104') of the steered axle (101, 101') are free to rotate relative to the axis (102, 102') of the steered axle (101, 101') respectively about the first axis (Z1, Z1') and the second axis (Z2, Z2').

8. The device (1) according to claim 7, wherein the first hydraulic chamber (C31, C32) of the hydraulic cylinder (31, 32) is connected to the second hydraulic chamber (C31', C32') of the hydraulic cylinder (31, 32) by:
- a first pipe (33) at which a first two-way valve (34) is arranged which can be controlled electrically or hydraulically, via an actuating means intended to be arranged on the towing vehicle (V), and in particular at or proximate to a driver cabin of said towing vehicle (V), and/or
- a second pipe (33') at which a second two-way valve (34') is arranged which can be controlled manually, via an actuating means intended to be arranged on the towed vehicle (100).

9. The device (1) according to one of claims 1 to 8 for a towed vehicle (100) comprising two steered axles (101, 101'):
- a first steered axle (101) with a first axis (102) receiving two wheels at its longitudinal ends: a first right wheel (103) and a first left wheel (104), each steerable relative to said first axis (102) respectively about a substantially vertical first axis (Z1) of the towed vehicle (100) and a substantially vertical second axis (Z2) of the towed vehicle (100), and
- a second steered axle (101'), offset from the first steered axle (101) according to the longitudinal direction (X) of the towed vehicle (100), with a second axis (102'), and also receiving two wheels at its longitudinal ends: a second right wheel (103') and a second left wheel (104'), each steerable relative to said second axis (102') respectively about a substantially vertical first axis (Z1') of the towed vehicle (100) and a second axis (Z2') substantially vertical to the towed vehicle (100),
said device (1) comprising:
- a first hydraulic actuator (31) intended to be linked to at least one wheel (103, 104) of the first steered axle (101), so as to cause the pivoting of said wheels (103, 104) relative to said first axis (102) respectively about said first axis (Z1) and the second axis (Z2), and connected to the first (23) and/or to the second (24) oil outlet orifice of the hydraulic distributor (2), so that supply thereof with fluid through said first orifice (23) causes the pivoting of the first right wheel (103) and the first left wheel (104) relative to said first axis (102) in a first direction of rotation (S1), respectively about said first axis (Z1) and the second axis (Z2), and/or that supply thereof with fluid through said second orifice (24) causes the pivoting of the first right wheel (103) and the first left wheel (104) relative to said first axis (102) in a second direction of rotation (S2), opposite to the first direction of rotation (S1), respectively about said first axis (Z1) and the second axis (Z2),
- a second hydraulic actuator (32) intended to be linked to at least one wheel (103', 104') of the second steered axle (101'), so as to cause the pivoting of said wheels (103', 104') relative to said second axis (102') respectively about said first axis (Z1') and the second axis (Z2'), and connected to the first (23) and/or to the second (24) oil outlet of the hydraulic distributor (2), so that supply thereof with fluid through said first orifice (23) causes the pivoting of the second right wheel (103') and the second left wheel (104') relative to said second axis (102') in the second direction of rotation (S2), respectively about said first axis (Z1') and the second axis (Z2'), and/or that supply thereof with fluid through said second orifice (24) causes the pivoting of the second right wheel (103') and the second left wheel (104') relative to said second axis (102') in the first direction of rotation (S1) respectively about said first axis (Z1) and the second axis (Z2).

10. The device (1) according to claim 9, considered in combination with one of claims 6 to 8, wherein:
- the first hydraulic actuator (31) is a first double-acting hydraulic cylinder, comprising a first hydraulic chamber (C31) and a second hydraulic chamber (C31') separated from each other by a movable piston (P31) secured to a rod (T31) of the first hydraulic cylinder (31),
- the second hydraulic actuator (32) is a second double-acting hydraulic cylinder, comprising a first hydraulic chamber (C32) and a second hydraulic chamber (C32') separated from each other by a movable piston (P32) secured to a rod (T32) of the second hydraulic cylinder (32),
and wherein:
- according to a first alternative, the first hydraulic chamber (C31) of the first hydraulic cylinder (31) is hydraulically connected to the first orifice (23) of the hydraulic distributor (2), the first hydraulic chamber (C32) of the second hydraulic cylinder (32) is connected to the second orifice (24) of the hydraulic distributor (2) and the second hydraulic chamber (C31') of the first hydraulic cylinder (31) is connected to the second hydraulic chamber (C32') of the second cylinder (32) via a third pipe (35), and so that the wheels (103, 104) of the first steered axle (101) are intended to pivot relative to the first axis (102) about their axis of rotation (Z1, Z2) in a direction opposite to that of the wheels (103', 104') of the second steered axle (101') relative to the second axis (102') about their respective rotation axis (Z1', Z2'), or
- according to a second alternative, the second hydraulic chamber (C31') of the first hydraulic cylinder (31) is hydraulically connected to the second orifice (24) of the hydraulic distributor (2), the second hydraulic chamber (C32') of the second hydraulic cylinder (32) is connected to the first orifice (23) of the hydraulic distributor (2) and the first hydraulic chamber (C31) of the first hydraulic cylinder (31) is connected to the first hydraulic chamber (C32) of the second cylinder (32) via a fourth pipe (34'), and so that the wheels (103, 104) of the first steered axle (101) are intended to pivot relative to the first axis (102) about their respective axis of rotation (Z1, Z2) in a direction opposite to that of the wheels (103', 104') of the second steered axle (101') relative to the second axis (102') about their respective rotation axis (Z1', Z2').

11. A towed vehicle (100) comprising at least one steered axle (101), and in particular a rear steered axle positioned substantially at the rear of said towed vehicle (100) according to the longitudinal direction (X) of the towed vehicle (100), with an axis (102) and two rear wheels: a right wheel (103) and a left wheel (104), each steerable relative to said axis (102) respectively about a substantially vertical first axis (Z1) of the towed vehicle (100) and a second axis (Z2) substantially vertical to the towed vehicle (100), as well as a drawbar (105) intended to pivotably link said towed vehicle (100) to a towing vehicle (V) about a substantially vertical articulation axis (ZV) of the towed vehicle (100) and a steering device (1) according to one of claims 1 to 10 secured to the towed vehicle (100).

12. An assembly comprising a towing vehicle (V) and a towed vehicle (100) according to claim 11, pivotably linked to the towing vehicle (V) via its drawbar (105) about an articulation axis (ZV), and in particular at a towing hitch (AV) of said towing vehicle (V).
